# EUROPEAN PATENT SPECIFICATION

(11) **EP 0 649 891 B1**
(45) Date of publication and mention of the grant of the patent: **17.05.2000**
(21) Application number: 94116663.9
(22) Date of filing: 21.10.1994
(51) Int. Cl.: C09D 183/14, C09D 183/04

(54) **Silicone compositions for the formation of cured release coatings**
Organopolysiloxanzusammensetzung für härtbare Trennschichten
Compositions de siloxanes pour la fabrication de revêtements reticulés antiadhésifs

(30) Priority: 22.10.1993 JP 28761393
(43) Date of publication of application: 26.04.1995
(73) Proprietor: Dow Corning Toray Silicone Company, Limited, Tokyo 103 (JP)
(72) Inventor: Kaiya, Nobuo, c/o Dow Corn. Toray Sil. Co. Ltd, Ichihara-shi, Chiba Prefecture (JP); Kobayashi, Hideki, c/o Dow Corn. Toray Sil. Co.Ltd, Ichihara-shi, Chiba Prefecture (JP); Nishiumi, Wataru, c/o Dow Corn. Toray Sil. Co.Ltd, Ichihara-shi, Chiba Prefecture (JP)
(74) Representative: Spott, Gottfried, Dr.

(56) References cited:
- EP-A- 0 439 778
- EP-A- 0 523 660
- EP-A- 0 641 819
- WO-A-93/16142
- US-A- 4 849 491

## Description

### Description for the following Contracting States : DE, FR, GB

The present invention relates to the use of an organosilicon compound as an additive for controlling release properties of a silicone release coating composition that cures to form a release coating. More specifically, our invention gives raise to a cured release coating which exhibits optimal release values against tacky substances and which does not impair the residual adhesion of tacky substances.

Cured films with excellent release properties for tacky substances can be formed on the surface of a substrate such as paper, cardboard, laminated paper, synthetic plastic films, fabrics, synthetic fibers, and metal foils, by coating the substrate with an organopolysiloxane-based silicone release coating composition and then by curing the composition.

A general problem associated with silicone release compositions has been in the extremely low peel-strength values. As a result, it is necessary to add controlled-release additives (CRAs) to these compositions to enhance the peel strength of their cured release coatings. These CRAs are exemplified by the MQ silicone copolymers taught in JP-A 49-27033 [27,033/74] and JP-A 59-84953 [84,953/84] which consist of the R₃SiO_{1/2} unit and the SiO_{4/2} unit wherein R denotes monovalent hydrocarbon groups having no more than 2 carbons. Another CRA is the MQ silicone copolymer taught in JP-A 53-29678 [29,678/78] which consists of the R₃SiO_{1/2}, (CH₂=CH)R₂SiO_{1/2}, and SiO_{4/2} units where R again denotes monovalent hydrocarbon groups having no more than 2 carbons.

The addition of these CRAs to silicone release compositions serves to increase the peel strength of cured release coatings previously below 20 gf/5 cm, for example, in applications with seals, labels, and pressure-sensitive adhesive tape. However, the addition of CRA also can cause substantial migration of the silicone into the tacky substance, and significantly impairs its residual adhesion. Moreover, since MQ silicone copolymers are solids at room temperature, their addition to silicone release coating compositions increases the composition viscosity, and degrades the coating properties of the composition.

EP-A-0 641 819 which has to be regarded as a prior art reference under Article 54 (3) and (4) EPC for the contracting states DE, FR, GB, discloses a method for the preparation of an organosilicon polymer having the structure: 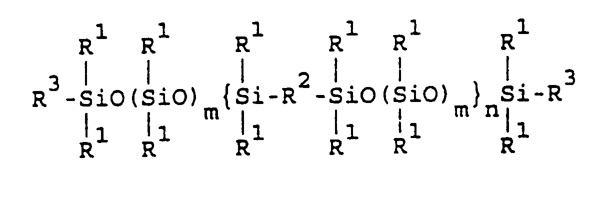 wherein each R¹ is a monovalent hydrocarbon group, R² is an alkylene group, R³ is selected from hydrogen atom, an alkenyl group or a hydroxyl group, m is zero or greater and n is 1 or more, said method comprising:
reacting (A) a diorganosiloxane having the general formula 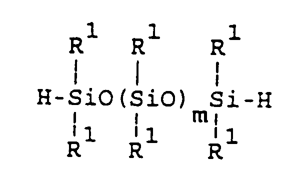 and
(B) an unsaturated aliphatic hydrocarbon having 3 to 10 carbon atoms that contains 2 carbon-carbon double bonds or an unsaturated aliphatic hydrocarbon having 2 to 10 carbon atoms that contains 1 carbon-carbon triple bond, said reaction taking place in the presence of
(C) a hydrosilylation-reaction catalyst.

It is an object of the present invention to provide the use of an organosilicon compound as an additive for controlling release properties of a silicone release coating composition which exhibits optimal release values against tacky substances and which does not impair the residual adhesion of tacky substances. This object is attained by the use of a new controlled release additive which can be employed in our silicone release coating compositions.

The present invention provides the use of an organosilicon compound having the general formula as an additive for controlling release properties of a silicone release coating composition: 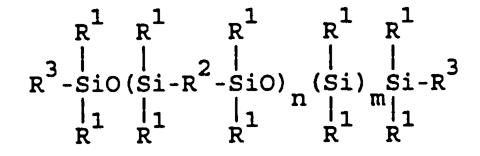 wherein R¹ denotes a monovalent hydrocarbon group having from 1 to 10 carbon atoms and being free of aliphatic unsaturation, R² denotes an alkylene group having from 2 to 10 carbon atoms, R³ is selected from hydrogen atom, an alkenyl group having from 2 to 10 carbon atoms, and a hydroxyl group, m has a value of zero or greater than zero, and n has a value of greater than zero.

The silicone release coating composition mentioned above is selected from an addition reaction-curing silicone release coating composition, a condensation reaction-curing silicone release coating composition, an organoperoxide-curing silicone release coating composition, and a radiation-curing silicone release coating composition curable by ultrviolet or electron beam radition. Addition reaction-curing and condensation reaction-curing silicone release coating compositions are preferred.

The preferred addition reaction compositions are silicone release coating compositions comprising (i) 100 weight parts of an organopolysiloxane having at least 2 alkenyl groups in each molecule and having a Viscosity of at least 40 mPa.s (centipoise) at 25°C, (ii) 0.5 to 90 weight parts organopolysiloxane having at least 2 silicon-bonded hydrogen atoms in each molecule and having a viscosity of 1 to 1,000 mPa.s (centipoise) at 25°C, and (iii) a catalytic quantity of a metal catalyst or complex thereof. As used hereinafter, all references to viscosity shall be understood to be in Scientific International units of mPa.s.

The organopolysiloxane of component (i) is the main compound of this type of silicone release coating composition. Preferably component (i) is a compound having the average unit formula R⁴ₐSiO_{(4-a)/2} wherein R⁴ denotes monovalent hydrocarbon groups, at least 2 of the R⁴ groups in the siloxane units are alkenyl groups, and a has a value of from 1.95 to 2.05. The monovalent hydrocarbon groups of R⁴ are exemplified by alkyl groups such as methyl, ethyl, propyl, and butyl; alkenyl groups such as vinyl, allyl, butenyl, pentenyl, and hexenyl; aryl groups such as phenyl, tolyl, and xylyl; aralkyl groups such as benzyl and phenethyl; and halogen-substituted alkyl groups such as 3-chloropropyl and 3,3,3-trifluoropropyl. At least 2 of the R⁴ groups in the siloxane units defined by the preceding formula must be alkenyl. The preferred non-alkenyl monovalent hydrocarbon groups for R⁴ are methyl.

The molecular structure of component (i) is not critical, and it may be straight chain, cyclic, network, or partially-branched straight chain, with straight-chain structures being preferred. The molecular chain terminal groups for the straight-chain forms of component (i) are trimethylsiloxy, dimethylvinylsiloxy, dimethylphenylsiloxy, and dimethylhydroxysiloxy groups.

Component (i) must have a viscosity at 25°C of at least 40 centipoise, while the upper limit ranges up to and includes the use of gums. When component (i) has a viscosity below 40 centipoise, excessively large amounts of the corresponding release coating composition will infiltrate into the substrate. When used in a solventless form, component (i) preferably has a viscosity at 25°C of 40 to 10,000 centipoise and more preferably 100 to 5,000 centipoise. When used in a solvent-based formulation, component (i) preferably has a viscosity at 25°C of 100,000 centipoise up to the viscosities of gums. More preferably, the viscosity ranges from 500,000 centipoise at 25°C up to the viscosities of gums.

The organopolysiloxanes encompassed by component (i) are exemplified by dimethylvinylsiloxy-endblocked dimethylpolysiloxanes, dimethylvinylsiloxy-endblocked dimethylsiloxane-methylvinylsiloxane copolymers, dimethylvinylsiloxy-endblocked dimethylsiloxane-methylphenylsiloxane copolymers, trimethylsiloxy-endblocked methylvinylpolysiloxanes, trimethylsiloxy-endblocked dimethylsiloxane-methylvinylsiloxane copolymers, trimethylsiloxy-endblocked dimethylsiloxane-methyl(5-hexenyl)siloxane copolymers, dimethylvinylsiloxy- endblocked dimethylsiloxane-methylvinylsiloxane-methylphenylsiloxane copolymers, dimethylhydroxysiloxy-endblocked methylvinylpolysiloxanes, and dimethylhydroxysiloxy- endblocked dimethylsiloxane-methylvinylsiloxane copolymers.

The organopolysiloxane of component (ii) functions as a crosslinker for these addition reaction compositions. Component (ii) is preferably a compound having the average unit formula R⁵_{b}SiO_{(4-b)/2} wherein R⁵ denotes a hydrogen atom or monovalent hydrocarbon groups free of aliphatic unsaturation, b has a value of from 1.50 to 3.00, with the proviso that at least 2 of the R⁵ groups in the siloxane units defined by the formula are hydrogen atoms. The monovalent hydrocarbon groups of R⁵ are as delineated above for R⁴ including preferred embodiments thereof.

The molecular structure of component (ii) is not critical, and it may be straight-chain, cyclic, network, and partially branched straight-chain, with straight-chain structures being preferred. The terminal groups for the straight-chain forms of component (ii) are exemplified by trimethylsiloxy, dimethylphenylsiloxy, dimethylhydrogensiloxy, and dimethylhydroxysiloxy. Component (ii) hasa preferred viscosity at 25°C of 1 to 1,000 centipoise, while the preferred range is 5 to 500 centipoise. When component (ii) has a viscosity below 1 centipoise, it will be too volatile and the resulting silicone release composition will not be stable. When the viscosity of this component exceeds 1,000 centipoise, the corresponding silicone release composition requires lengthy cure times, and the cured release coating will exhibit a poor release performance.

The organopolysiloxanes encompassed by component (ii) are trimethylsiloxy-endblocked methylhydrogenpolysiloxanes, trimethylsiloxy-endblocked dimethylsiloxane-methylhydrogensiloxane copolymers, dimethylhydrogensiloxy-endblocked dimethylpolysiloxanes, dimethylhydrogensiloxy-endblocked dimethylsiloxane-methylhydrogensiloxane copolymers, cyclic methylhydrogenpolysiloxanes, and cyclic methylhydrogensiloxane-dimethylsiloxane copolymers.

Component (ii) must be added to the addition reaction composition at 0.5 to 90 weight parts per 100 weight parts of component (i) and is preferably added at 1 to 80 weight parts per . Addition of component (ii) at less than 0.5 weight parts per 100 weight parts of component (i) will result in an inadequate cure on the part of the corresponding silicone release coating composition. An addition in excess of 90 weight parts will impair the release performance of the resulting cured release coating.

The metal catalyst and metal catalyst complexes of Component (iii) for our addition reaction composition are catalysts that accelerate the addition reaction between components (i) and (ii) and cause the composition to cure. Preferably, component (iii) is platinum or a platinum compound (i.e. a platinum complex). Component (iii) is chloroplatinic acid, alcohol solutions of chloroplatinic acid, chloroplatinic acid/olefin complexes, chloroplatinic acid/vinylsiloxane complexes, chloroplatinic acid/ketone complexes, platinum supported on alumina micropowder, platinum supported on silica micropowder, and platinum black. The quantity of component (iii) for our addition reaction composition is not critical as long as this component is added in a catalytic quantity. The preferred quantity of component (iii) is 1 to 1,000 ppm based on the weight of (i).

In addition to components (i), (ii), and (iii), addition reaction composition may contain an addition reaction inhibitor for the purpose of equipping the composition with storage stability at room temperature. Examples of suitable inhibtors include acetylenic alcohols such as ethynylcyclohexanol and methylbutynol, conjugated ene-ynes, unsaturated carboxylic esters such as diallyl maleate and dimethyl maleate, maleates and fumarates such as diethyl fumarate, diallyl fumarate, and bis-(methoxyisopropyl) maleate, and half esters and amides. Preferred as the addition reaction inhibitor are alkynyl alcohols such as 3-methyl-1-butyn-3-ol, 3,5-dimethyl-1-hexyn-3-ol, 3-methyl-1-pentyn-3-ol, and phenylbutynol; conjugated ene-ynes such as 3-methyl-3-penten-1-yne and 3,5-dimethyl-1-hexyn-3-ene, benzotriazole, and methylvinylsiloxane cyclics. The quantity of inhibitor should be selected as appropriate. Preferably, it is added to the composition in an amount of 0.001 to 5 weight parts per 100 weight parts component (i).

Bath life extender compounds may also be used in an amount sufficient to further retard the curing reaction at room temperature. Examples of suitable compounds include those compounds which contain one or more primary or secondary alcohol groups, carboxylic acids (including compounds which yield carboxylic acids when exposed to water at room temperature), cyclic ethers, and water. Included in this group are the primary and secondary alcohols; diols and triols, such as ethylene glycol, propylene glycol and glycerine; partial ethers of diols and triols, such as 2-methoxyethanol, 2-methoxypropanol, and 2-methoxyisopropanol; tetrahydrofuran; water and aqueous solutions of mineral acids , alkalis, and salts. Primary and secondary alcohols, preferably having fewer than 10 carbon atoms are the most preferred for the compositions of this invention. Examples thereof include methanol, 1-butanol, 2-butanol, tetradecanol and other alkanols, such as ethanol, and normal-, and iso-propanol, iso-butanol, and the normal-, secondary-, and iso-pentanols, - hexanols, -heptanols, and -octanols; benzyl alcohol, phenol, and other aromatic alcohols such as methylphenyl carbinol, and 2-phenylethyl alcohol; allyl alcohol, and cyclohexanol. It is highly preferred that the bath life extender is benzyl alcohol or water.

The amount of bath life extender used in this invention is not critical and is merely that amount which will provide a longer bath life for the composition, than the bath life of an identical composition without the extender. Amounts of extended can be as high as 10 percent or more by weight, based on the weight of component (i); however superior results with respect to bath life and cure time can be obtained using a lesser amount. Preferably, the amount of bath life extender falls within the range of 0.1 to 5 percent by wieght, and most preferably 1 to 3 percent, based on the weight of Component (i).

The preferred condensation reaction compositions are release coating compositions comprising: (a) 100 weight parts of an organopolysiloxane having at least 2 silicon-bonded hydroxyl groups per molecule and having a viscosity of at least 40 centipoise at 25°C, (b) 0.5 to 90 weight parts of an organopolysiloxane having at least 2 silicon-bonded hydrogen atoms per molecule and having a viscosity of 1 to 1,000 centipoise at 25°C, and (c) 0.01 to 20 weight parts of a metal salt of an organic acid.

The organopolysiloxane of component (a) is the main compound of this type of silicone release coating composition. Component (a) is preferably a compound having the average unit formula R⁶_{c}SiO_{(4-c)/2} wherein R⁶ denotes monovalent hydrocarbon groups or a silicon-bonded hydroxyl group, and c has a value of from 1.95 to 2.05, with the proviso that at least 2 of R⁶ groups per compound are silicon-bonded hydroxyl groups. The monovalent hydrocarbon groups of R⁶ are as delineated above for R⁴ including preferred embodiments thereof. It is preferred that R⁶ is methyl.

The molecular structure of component (a) is not critical, and it may be straight chain, cyclic, network, and partially branched straight chain, with straight-chain structures being preferred. The terminal groups for the straight-chain forms of (a) are exemplified by dimethylhydroxysiloxy and methylphenylhydroxysiloxy. Component (a) must have a viscosity at 25°C of at least 40 centipoise, while the upper limit ranges up to and include the use of gums. When component (a) has a viscosity below 40 centipoise, excessively large amounts of the corresponding release coating composition will infiltrate into the substrate. When used in a solventless form, (a) preferably has a viscosity at 25°C of 40 to 10,000 centipoise and more preferably of 100 to 5,000 centipoise. When used in a solvent-based formulation, component (a) preferably has a viscosity at 25°C of 100,000 centipoise up to the viscosities of gums. More preferably, the viscosity ranges from 500,000 centipoise up to the viscosities of gums.

The organopolysiloxane compounds of component (a) are exemplified by dimethylhydroxysiloxy-endblocked dimethylpolysiloxanes, dimethylhydroxysiloxy-endblocked dimethylsiloxane-methylvinylsiloxane copolymers, dimethylhydroxysiloxy-endblocked dimethylsiloxane-methylphenylsiloxane copolymers, dimethylhydroxysiloxy-endblocked methylvinylpolysiloxanes, dimethylhydroxysiloxy- endblocked methylphenylpolysiloxanes, dimethylhydroxysiloxy-endblocked dimethylsiloxane-methyl(5-hexenyl)siloxane copolymers, and dimethylhydroxysiloxy-endblocked methylphenylpolysiloxanes.

The organopolysiloxane of component (b) functions as a crosslinker for the condensation reaction. Component (b) is preferably a compound having the average unit formula R⁷_{d}SiO_{(4-d)/2} wherein R⁷ is selected from hydrogen atom and monovalent hydrocarbon groups, and d has a value of 1.50 to 3.00, with the proviso that at least 2 of the R⁷ groups in the siloxane units defined by the formula are hydrogen atoms. The monovalent hydrocarbon groups of R⁷ are as delineated above for R⁴ including preferred embodiments thereof. It is preferred that R⁷ is methyl.

The molecular structure of component (b) is not critical, and it may be straight-chain, cyclic, network, and partially branched straight-chain, with straight-chain structures being preferred. The terminal groups for the straight-chain forms of component (b) are exemplified by trimethylsiloxy, dimethylphenylsiloxy, dimethylhydrogensiloxy, and dimethylhydroxysiloxy. Component (b) has a preferred viscosity at 25°C of 5 to 500 centipoise. When component (b) has a viscosity below 1 centipoise, it will be too volatile and the resulting silicone release composition will not be stable. When the viscosity of this component exceeds 1,000 centipoise, the corresponding silicone release coating composition requires lengthy cure times, and the cured release coating will exhibit a poor release performance.

The organopolysiloxane compounds of component (b) are exemplified by trimethylsiloxy-endblocked methylhydrogenpolysiloxanes, trimethylsiloxy-endblocked dimethylsiloxane-methylhydrogensiloxane copolymers, dimethylhydrogensiloxy-endblocked dimethylpolysiloxanes, dimethylhydrogensiloxy-endblocked dimethylsiloxane-methylhydrogensiloxane copolymers, cyclic methylhydrogenpolysiloxanes, and cyclic methylhydrogensiloxane- dimethylsiloxane copolymers.

Component (b) must be added to the condensation reaction compositions at 0.5 to 90 weight parts per 100 weight parts of component (a), and is preferably present in amount from 1 to 80 weight parts. Addition of component (b) at less than 0.5 weight parts per 100 weight parts of component (a) will result in an inadequate cure on the part of the corresponding silicone release coating composition. An addition in excess of 90 weight parts will impair the release performance of the resulting cured release coating.

The metal salts of organic acids of component (c) in the condensation reaction compositions are catalysts that accelerate the condensation reaction between components (a) and (b) and cause the composition to cure. Component (c) is exemplified by dibutyltin diacetate, dibutyltin dioctoate, dibutyltin dilaurate, dioctyltin dilaurate, tin octoate, zinc naphthoate, and iron octoate.

Preferably component (c) is present in the condensation reaction compositions in an amount of from 0.01 to 20 weight parts per 100 weight parts of component (a).

The silicone release coating compositions used according to our invention may optionally contain organic solvents, adhesion promoters, colorants, pigments, and fillers such as silica micropowder. The use of organic solvents is preferred because they improve the storage stability of the compositions and improve the coatability on various substrates. The specific organic solvent is not critical as long as it can provide a homogeneous solution of the composition. This organic solvent is exemplified by aromatic hydrocarbons such as benzene, toluene, and xylene, aliphatic hydrocarbons such as pentane, hexane, and heptane, halogenated hydrocarbons such as trichloroethylene, perchloroethylene, trifluoromethylbenzene, 1,3-bis(trifluoromethyl)benzene, and methylpentafluorobenzene, ethyl acetate and methyl ethyl ketone.

As additive for controlling release properties of a silicone release coating composition according to the present invention there is used an organosilicon compound having the general formula 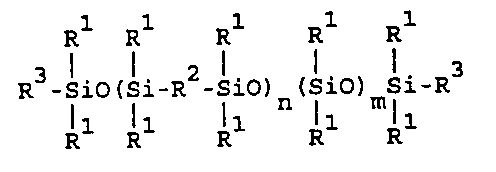 wherein R¹ denotes a monovalent hydrocarbon group having from 1 to 10 carbon atoms and being free of aliphatic unsaturation, R² denotes an alkylene group having from 2 to 10 carbon atoms, R³ is selected from a hydrogen atom, an alkenyl group having from 2 to 10 carbon atoms, and a hydroxyl group, m has a value of zero or greater than zero, and n has a value of greater than zero.

This organosilicon compound functions as a CRA and imparts an optimal peel strength to the silicone release coating compositions when they are applied to a substrate and cured. It also functions to inhibit the migration of the base compounds of components (i) and (a) into the tacky substance. It thereby prevents any reduction in the residual adhesion of the tacky substance.

The group R¹ is exemplified by alkyl groups such as methyl, ethyl, propyl, butyl, pentyl, and octyl; aryl groups such as phenyl, tolyl, and xylyl; aralkyl groups such as benzyl and phenethyl, and halogen-substituted alkyl groups such as 3-chloropropyl and 3,3,3-trifluoropropyl. It is preferred that R¹ is methyl.

The group R² is specifically exemplified by ethylene, propylene, butylene, pentylene, hexylene, and octylene. The group R³ denotes a hydrogen atom, an alkenyl group having from 2 to 10 carbon atoms, or a silicon-bonded hydroxyl group. The alkenyl groups of R³ are vinyl, allyl, butenyl, pentenyl, hexenyl, and octenyl. The group R³ of the organosilicon compound is preferably a hydrogen atom or an alkenyl group having from 2 to 10 carbon atoms when said silicone release coating composition is an addition reaction composition. The group R³ is preferably a hydrogen atom or a silicon-bonded hydroxyl group when said silicone release coating composition is a condensation reaction composition.

The viscosity of said organosilicon compound used according to the present invention at 25°C is not critical. The preferred range is 50 to 10,000 centistokes because this range affords excellent handling characteristics for the silicone release coating composition, and also provides excellent release properties the corresponding cured release coating. Said organosilicon compound used according to the present invention is desirable as a CRA for solvent-free silicone release coating compositions because it does not raise the viscosity of the composition. In addition, the peel strength of the cured release coating can be adjusted by varying the quantity of the organosilicon compound used according to the present invention.

Organosilicon compounds suitable for use in silicone release coating compositions include compounds having the following general formulae: 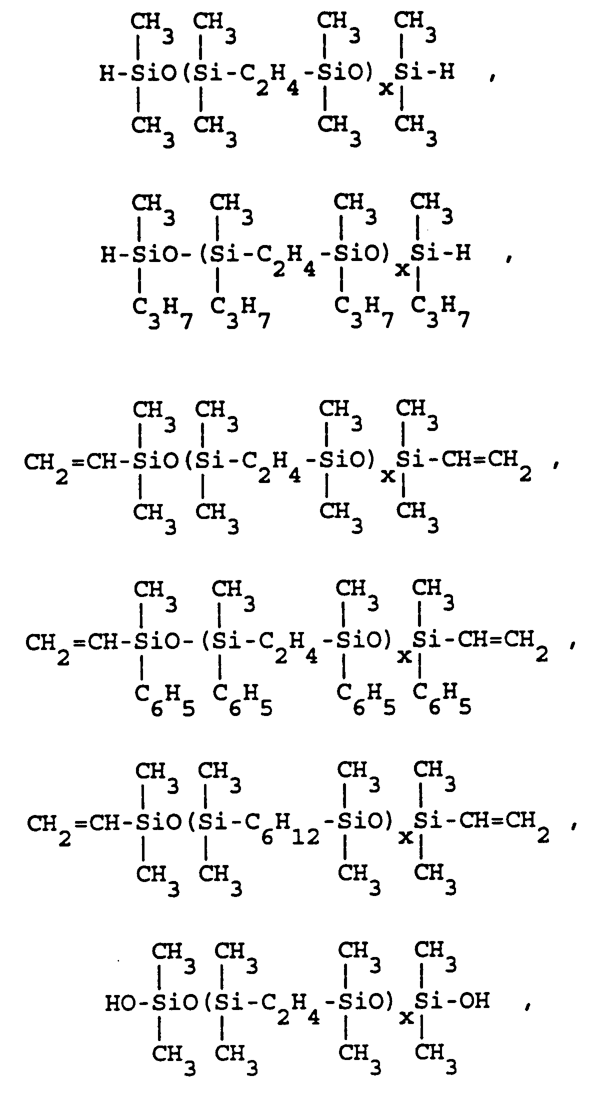 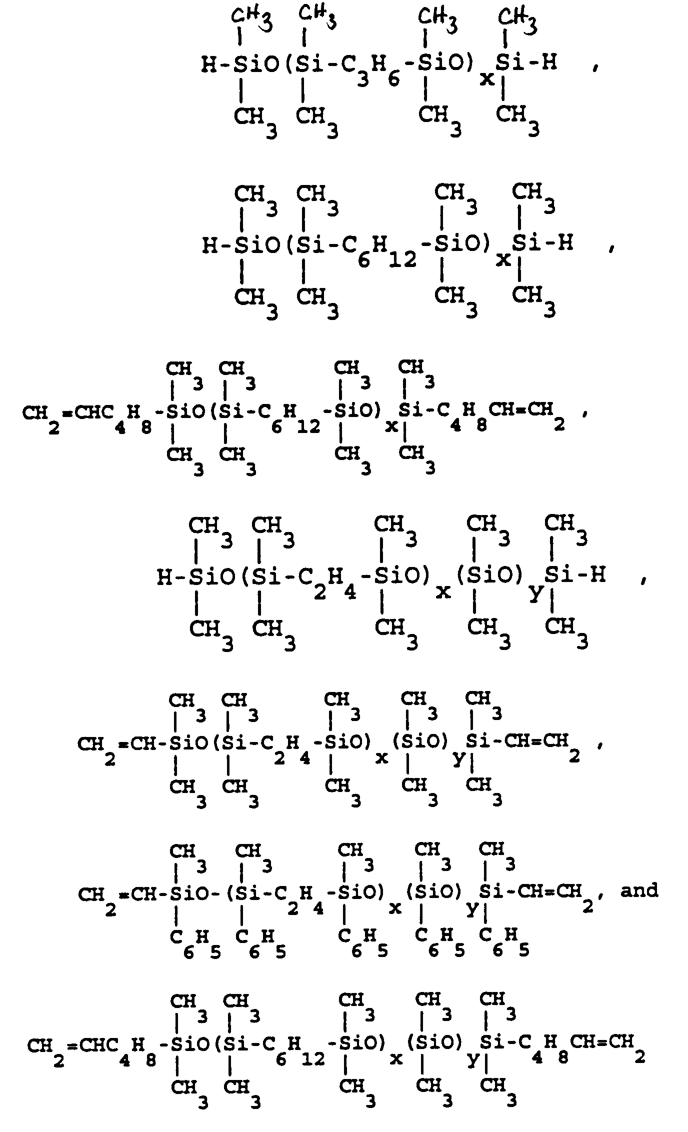 wherein x any y both have a value of greater than zero. No particular restrictions apply to the method for preparing the organosilicon compound used according to the present invention. It can be prepared, for example, by running an addition polymerization reaction. This is carried out by reacting a diorganosiloxane having the general formula: 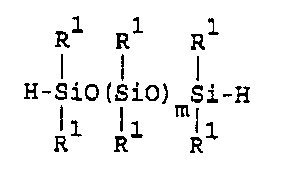 wherein R¹ denotes a monovalent hydrocarbon group having from 1 to 10 carbon atoms and being free of aliphatic unsaturation and m has a value of zero or greater than zero with a diorganosiloxane having the general formula: 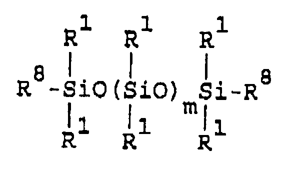 wherein R¹ denotes a monovalent hydrocarbon group having from 1 to 10 carbon atoms and being free of aliphatic unsaturation, R⁸ denotes an alkenyl group having from 2 to 10 carbon atoms, and m has a value of zero or greater than zero, in the presence of platinum or a complex of platinum.

Another method comprises an addition polymerization reaction, which relates in the presence of platinum or a platinum complex, a diorganosiloxane having the general formula: 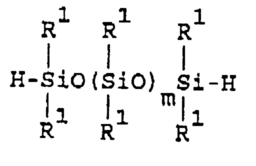 wherein R¹ denotes a monovalent hydrocarbon group having from 1 to 10 carbon atoms and being free of aliphatic unsaturation and m has a value of zero or greater than zero, and a compound containing unsaturated aliphatic hydrocarbon groups having from 3 to 10 carbon atoms and having 2 carbon-carbon double bonds or a compound containing unsaturated aliphatic hydrocarbon groups having from 2 to 10 carbon atoms and having a carbon-carbon triple bond. Still another method comprises first hydrolyzing an organosilicon compound having the general formula: 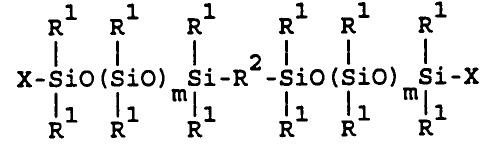 wherein R¹ denotes a monovalent hydrocarbon group having from 1 to 10 carbon atoms and being free of aliphatic unsaturation, R² denotes an alkylene group having from 2 to 10 carbon atoms, X denotes a hydrolyzable group, and m has a value of zero or greater than zero, followed by polymerization under acid or base catalysis. X is exemplified by halogen atoms such as chlorine, and bromine, and by alkoxy groups such as methoxy, ethoxy, and propoxy.

The organosilicon compound used according to the present invention is present in the silicone release coating compositions in an amount of from 0.5 to 500 weight parts per 100 weight parts of the organopolysiloxane component (i.e. components (i) or (a)) in the silicone release coating compositions. The release resistance of the cured release coating will be too low when the organosilicon compound used according to the present invention is present at less than 0.5 weight parts per 100 weight parts of the organopolysiloxane component in the silicone release coating compositions Contrastingly, the release resistance of the cured release coating becomes very high when said organosilicon compound is present at more than 500 weight parts. In the case of a addition reaction composition, said organosilicon compound is preferably present in an amount from 1.0 to 500 weight parts, and more preferably at 2.0 to 200 weight parts per 100 weight parts of organopolysiloxane (i). In the case of a condensation reaction composition, said organosilicon compound is preferably present in an amount from 1.0 to 500 weight parts, and more preferably at 2.0 to 200 weight parts, per 100 weight parts of organopolysiloxane (a).

A silicone release coating composition may be prepared by blending the organosilicon compound used according to the present invention into the silicone release coating composition, either during or after its preparation. The conditions for curing our silicone release compositions are not critical. For example, the release coating is preferably cured on a coated substrate by applying heat to the substrate at temperatures in the range of 50°C to 200°C. When cured, the silicone release coating compositions exhibit optimal release values against tacky substances. They can be formed on the surface of various substrates such as paper, cardboard, laminated paper, synthetic plastic films, fabrics, synthetic fibers, and metal foils. Substrates having applied thereon our cured release coatings can be used for applications such as process paper, asphalt paper, tapes, and labels. Since the relatively low-viscosity organosilicon compound used according to the present invention can be used as the CRA in the silicone release compositions, this invention can, surprinsingly be used to formulate solvent-free silicone release coatings.

The silicone release coating compositions are described in greater detail through working examples. The viscosity values reported were measured at 25°C. The cured release coatings were evaluated for their peel strength and residual adhesion in relation to tacky substances in accordance with the following methods.

The peel strength of the cured release coating was evaluated as follows. The silicone release composition was coated at approximately 1.0 g/m² on polyethylene-laminated kraft paper, and then cured by heating the coated paper in a forced circulation oven for 30 seconds at 160°C. An acrylic-based pressure-sensitive adhesive (Oribine™ BPS8170, from Toyo Ink Mfg. Company, Limited) was then coated on the resulting cured release coating followed by heating for 2 minutes at 70°C in a forced circulation oven. A 25-micrometer polyethylene terephthalate film was subsequently applied to the acrylic-based pressure-sensitive adhesive, and the assembly was then held at 25°C in 60% humidity under a load of 20 gf/cm². A 5-cm wide strip was subsequently cut from the backing paper, and the peel strength (gf) was measured by peeling the backing paper strip at 180° using a Tensilon™ tester.

The residual adhesion of tacky substances was measured as follows. The silicone release coating composition was coated at approximately 1.0 g/m² on polyethylene-laminated kraft paper, and a cured release coating was then produced by heating the coated paper in a forced circulation oven for 30 seconds at 160°C. Polyester tape (Polyester Tape 31B from Nitto Denko Kabushiki Kaisha) was applied to the cured release coating, and the assembly was heated for 20 hours at 60°C under a load of 20 gf/cm². The polyester tape was thereafter peeled off and applied to a stainless steel sheet. The peel strength F (gf) was measured by peeling the polyester tape at 180° using a Tensilon™ tester. In the blank experiment, the same type of polyester tape as above was applied to a sheet of Teflon™ instead of our silicone release coating composition. This was followed by heating for 20 hours at 60°C under a load of 20 gf/cm². The polyester tape was thereafter peeled off and applied to a stainless steel sheet. The peel strength was measured by peeling the polyester tape at 180° using a Tensilon™ tester to give the reference peel strength F₀ for the polyester tape. The peel strength F is reported as a percentage (%) of the reference peel strength F₀.

### Example 1

The following were mixed to homogeneity: 100 weight parts of trimethylsiloxy-endblocked dimethylsiloxane- methylvinylsiloxane copolymer gum (having a vinyl group content of 1 weight percent), 5 weight parts of trimethylsiloxy-endblocked methylhydrogenpolysiloxane (having a viscosity of 10 centipoise), 40 weight parts of an organosilicon compound (having a viscosity of 400 centipoise) having the formula: 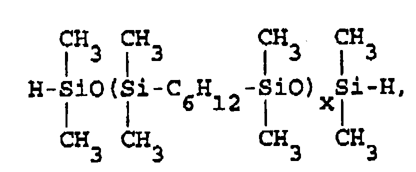 0.9 weight parts 3,5-dimethyl-3-hexen-1-yne, and 1,350 weight parts toluene. A silicone release composition was then prepared by the addition with mixing to homogeneity of sufficient isopropanolic chloroplatinic acid solution to give 100 ppm platinum metal in the chloroplatinic acid based on the dimethylsiloxane-methylvinylsiloxane copolymer. The peel strength and residual adhesion of the tacky substance were measured on the cured release coating afforded by the cure of this silicone release composition. These results are reported in Table I.

### Comparative Example 1

A silicone release composition was prepared as in Example 1, but without the organosilicon compound that was used in Example 1. The peel strength and residual adhesion of the tacky substance were measured on the cured release coating, and these results are reported in Table I.

### Example 2

The following were mixed to homogeneity: 100 weight parts of dimethylvinylsiloxy-endblocked dimethylsiloxane- methylvinylsiloxane copolymer (having a viscosity of 520 centipoise and a vinyl group content of 0.8 weight percent), 7 weight parts trimethylsiloxy-endblocked methylhydrogenpolysiloxane (having a viscosity of 20 centipoise), 64 weight parts of an organosilicon compound (having a viscosity of 350 centipoise) having the formula 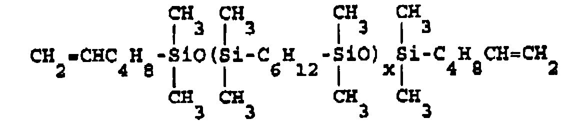 and 0.9 weight parts methylbutynol. A silicone release composition having a viscosity of 400 centipoise was then prepared by the addition with mixing to homogeneity of sufficient isopropanolic chloroplatinic acid solution to give 190 ppm platinum metal in the chloroplatinic acid based on the dimethylsiloxane-methylvinylsiloxane copolymer. The peel strength and residual adhesion of the tacky substance were measured on the resulting cured release coating, and these results are reported in Table I.

### Comparative Example 2

A silicone release composition having a viscosity of 2,000 centipoise was prepared using the procedure of Example 2, but replacing the organosilicon polymer with a granular silicone copolymer compound having the following average unit formula:

(CH₂=CH(CH₃)₂SiO_{1/2})_{0.1}((CH₃)₃SiO_{1/2})_{0.7}(SiO_{4/2})_{1.0} .

The peel strength and residual adhesion of tacky substance were measured on the cured release coating afforded by this silicone release composition, and these results are reported in Table I.

### Example 3

A silicone release composition having a viscosity of 420 centipoise was prepared using the procedure of Example 2, but in this case replacing the organosilicon compound with 64 weight parts of an organosilicon compound (having a viscosity of 400 centipoise) having the following formula 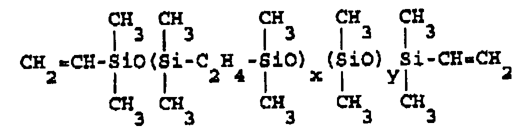 where the ratio of x to y (x:y) is 9.1. The peel strength and residual adhesion of the tacky substance were measured on the cured release coating afforded by the cure of this composition, and these results are reported in Table I.

**Table I**

| | invention examples | | | comparative examples | |
|---|---|---|---|---|---|
| | Example 1 | Example 2 | Example 3 | Comp. Ex. 1 | Comp. Ex. 2 |
| peel strength (gf/5 cm) | 56 | 63 | 60 | 22 | 54 |
| residual adhesion (%) | 98 | 99 | 98 | 98 | 75 |

### Example 4

A silicone release composition was prepared by mixing the following to homogeneity in 1,350 weight parts toluene: 100 weight parts of a dimethylhydroxysiloxy-endblocked dimethylpolysiloxane gum, 7 weight parts of trimethylsiloxy-endblocked methylhydrogenpolysiloxane having a viscosity of 10 centipoise, 40 weight parts of an organosilicon compound (having a viscosity of 400 centipoise) having the following formula: 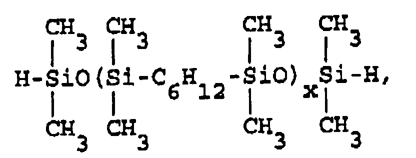 and 5 weight parts of dibutyltin diacetate. The peel strength and residual adhesion of tacky substance were measured on the cured release coating, and these results are reported in Table II.

### Comparative Example 3

A silicone release composition was prepared using the procedure of Example 4, but without using the organosilicon compound. The peel strength and residual adhesion of tacky substance were measured on the cured release coating, and these results are reported in Table II.

### Example 5

A silicone release composition having a viscosity of 900 centipoise was prepared by mixing the following to homogeneity in 1,390 weight parts toluene: 100 weight parts of dimethylhydroxysiloxy-endblocked dimethylpolysiloxane gum, 12 weight parts of trimethylsiloxy-endblocked methylhydrogenpolysiloxane having a viscosity of 10 centipoise, 40 weight parts of an organosilicon compound (having a viscosity of 350 centipoise) with the following formula 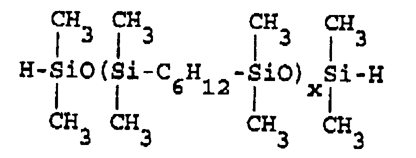 and 5 weight parts dibutyltin diacetate. The peel strength and residual adhesion of tacky substance were measured on the cured release coating, and these results are reported in Table II.

### Comparative Example 4

A silicone release composition having a viscosity of 7,000 centipoise was prepared using the procedure of Example 5, but replacing the organosilicon compound with a granular silicone copolymer compound having the following average unit formula:

(CH₂=CH(CH₃)₂SiO_{1/2})_{0.1}((CH₃)₃SiO_{1/2})_{0.7}(SiO_{4/2})_{1.0} .

The peel strength and residual adhesion of the tacky substance were measured on the cured release coating, and these results are reported in Table II.

### Example 6

A silicone release composition was prepared using the procedure of Example 5, but replacing the organosilicon compound with 64 weight parts of an organosilicon compound (having a viscosity of 1,600 centipoise) having the following formula 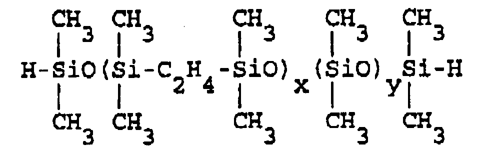 wherein the ratio of x to y (x:y) is 9:1. The peel strength and residual adhesion of the tacky substance were measured on the cured release coating, and these results are reported in Table II.

**Table II**

| | invention examples | | | comparative examples | |
|---|---|---|---|---|---|
| | Example 4 | Example 5 | Example 6 | Comp. Ex. 3 | Comp. Ex. 4 |
| peel strength (gf/5 cm) | 59 | 56 | 53 | 20 | 42 |
| residual adhesion (%) | 94 | 94 | 93 | 94 | 73 |

### Description for the following Contracting States : ES, IT

The present invention is a silicone composition that cures to form a release coating. More specifically, our invention gives a cured release coating which exhibits optimal release values against tacky substances and which does not impair the residual adhesion of tacky substances.

Cured films with excellent release properties for tacky substances can be formed on the surface of a substrate such as paper, cardboard, laminated paper, synthetic plastic films, fabrics, synthetic fibers, and metal foils, by coating the substrate with an organopolysiloxane-based silicone release coating composition and then by curing the composition.

A general problem associated with silicone release compositions has been in the extremely low peel-strength values. As a result, it is necessary to add controlled-release additives (CRAs) to these compositions to enhance the peel strength of their cured release coatings. These CRAs are exemplified by the MQ silicone copolymers taught in JP-A 49-27033 [27,033/74] and JP-A 59-84953 [84,953/84] which consist of the R₃SiO_{1/2} unit and the SiO_{4/2} unit wherein R denotes monovalent hydrocarbon groups having no more than 2 carbons. Another CRA is the MQ silicone copolymer taught in JP-A 53-29678 [29,678/78] which consists of the R₃SiO_{1/2}, (CH₂=CH)R₂SiO_{1/2}, and SiO_{4/2} units where R again denotes monovalent hydrocarbon groups having no more than 2 carbons.

The addition of these CRAs to silicone release compositions serves to increase the peel strength of cured release coatings previously below 20 gf/5 cm, for example, in applications with seals, labels, and pressure-sensitive adhesive tape. However, the addition of CRA also can cause substantial migration of the silicone into the tacky substance, and significantly impairs its residual adhesion. Moreover, since MQ silicone copolymers are solids at room temperature, their addition to silicone release coating compositions increases the composition viscosity, and degrades the coating properties of the composition.

It is an object of the present invention to produce a silicone release coating composition which exhibits optimal release values against tacky substances and which does not impair the residual adhesion of tacky substances. This object is attained by a new controlled release additive which can be employed in our silicone release coating compositions.

It is also an object of the present invention to produce a solvent-free silicone release coating composition containing our new controlled release additives.

The present invention provides a composition comprising: (A) a silicone release coating composition, and (B) an organosilicon compound having the general formula: 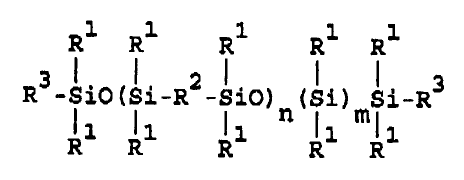 wherein R¹ denotes a monovalent hydrocarbon group having from 1 to 10 carbon atoms and being free of aliphatic unsaturation, R² denotes an alkylene group having from 2 to 10 carbon atoms, R³ is selected from hydrogen atom, an alkenyl group having from 2 to 10 carbon atoms, and a hydroxyl group, m has a value of zero or greater than zero, and n has a value of greater than zero.

The silicone release coating composition of (A) is selected from an addition reaction-curing silicone release coating composition, a condensation reaction-curing silicone release coating composition, an organoperoxide-curing silicone release coating composition, and a radiation-curing silicone release coating composition curable by ultrviolet or electron beam radition. Addition reaction-curing and condensation reaction-curing silicone release coating compositions are preferred.

Our preferred addition reaction compositions are silicone release coating compositions comprising (i) 100 weight parts of an organopolysiloxane having at least 2 alkenyl groups in each molecule and having a viscosity of at least 40 mPa.s (centipoise) at 25°C, (ii) 0.5 to 90 weight parts organopolysiloxane having at least 2 silicon-bonded hydrogen atoms in each molecule and having a viscosity of 1 to 1,000 mPa.s (centipoise) at 25°C, and (iii) a catalytic quantity of a metal catalyst or complex thereof. As used hereinafter, all references to viscosity shall be understood to be in Scientific International units of mPa.s.

The organopolysiloxane of component (i) is the main compound of this type of silicone release coating composition. Preferably component (i) is a compound having the average unit formula R⁴ₐSiO_{(4-a)/2} wherein R⁴ denotes monovalent hydrocarbon groups, at least 2 of the R⁴ groups in the siloxane units are alkenyl groups, and a has a value of from 1.95 to 2.05. The monovalent hydrocarbon groups of R⁴ are exemplified by alkyl groups such as methyl, ethyl, propyl, and butyl; alkenyl groups such as vinyl, allyl, butenyl, pentenyl, and hexenyl; aryl groups such as phenyl, tolyl, and xylyl; aralkyl groups such as benzyl and phenethyl; and halogen-substituted alkyl groups such as 3-chloropropyl and 3,3,3-trifluoropropyl. At least 2 of the R⁴ groups in the siloxane unite defined by the preceding formula must be alkenyl. The preferred non-alkenyl monovalent hydrocarbon groups for R⁴ are methyl.

The molecular structure of component (i) is not critical, and it may be straight chain, cyclic, network, or partially-branched straight chain, with straight-chain structures being preferred. The molecular chain terminal groups for the straight-chain forms of component (i) are trimethylsiloxy, dimethylvinylsiloxy, dimethylphenylsiloxy, and dimethylhydroxysiloxy groups.

Component (i) must have a viscosity at 25°C of at least 40 centipoise, while the upper limit ranges up to and includes the use of gums. When component (i) has a viscosity below 40 centipoise, excessively large amounts of the corresponding release coating composition will infiltrate into the substrate. When used in a solventless form, component (i) preferably has a viscosity at 25°C of 40 to 10,000 centipoise and more preferably 100 to 5,000 centipoise. When used in a solvent-based formulation, component (i) preferably has a viscosity at 25°C of 100,000 centipoise up to the viscosities of gums. More preferably, the viscosity ranges from 500,000 centipoise at 25°C up to the viscosities of gums.

The organopolysiloxanes encompassed by component (i) are exemplified by dimethylvinylsiloxy-endblocked dimethylpolysiloxanes, dimethylvinylsiloxy-endblocked dimethylsiloxane-methylvinylsiloxane copolymers, dimethylvinylsiloxy-endblocked dimethylsiloxane-methylphenylsiloxane copolymers, trimethylsiloxy-endblocked methylvinylpolysiloxanes, trimethylsiloxy-endblocked dimethylsiloxane-methylvinylsiloxane copolymers, trimethylsiloxy-endblocked dimethylsiloxane-methyl(5-hexenyl)siloxane copolymers, dimethylvinylsiloxy- endblocked dimethylsiloxane-methylvinylsiloxane-methylphenylsiloxane copolymers, dimethylhydroxysiloxy-endblocked methylvinylpolysiloxanes, and dimethylhydroxysiloxy- endblocked dimethylsiloxane-methylvinylsiloxane copolymers.

The organopolysiloxane of component (ii) functions as a crosslinker for these addition reaction compositions. Component (ii) is preferably a compound having the average unit formula R⁵_{b}SiO_{(4-b)/2} wherein R⁵ denotes a hydrogen atom or monovalent hydrocarbon groups free of aliphatic unsaturation, b has a value of from 1.50 to 3.00, with the proviso that at least 2 of the R⁵ groups in the siloxane unite defined by the formula are hydrogen atoms. The monovalent hydrocarbon groups of R⁵ are as delineated above for R⁴ including preferred embodiments thereof.

The molecular structure of component (ii) is not critical, and it may be straight-chain, cyclic, network, and partially branched straight-chain, with straight-chain structures being preferred. The terminal groups for the straight-chain forms of component (ii) are exemplified by trimethylsiloxy, dimethylphenylsiloxy, dimethylhydrogensiloxy, and dimethylhydroxysiloxy, Component (ii) hasa preferred viscosity at 25°C of 1 to 1,000 centipoise, while the preferred range is 5 to 500 centipoise. When component (ii) has a viscosity below 1 centipoise, it will be too volatile and the resulting silicone release composition will not be stable. When the viscosity of this component exceeds 1,000 centipoise, the corresponding silicone release composition requires lengthy cure times, and the cured release coating will exhibit a poor release performance.

The organopolysiloxanes encompassed by component (ii) are trimethylsiloxy-endblocked methylhydrogenpolysiloxanes, trimethylsiloxy-endblocked dimethylsiloxane-methylhydrogensiloxane copolymers, dimethylhydrogensiloxy-endblocked dimethylpolysiloxanes, dimethylhydrogensiloxy-endblocked dimethylsiloxane-methylhydrogensiloxane copolymers, cyclic methylhydrogenpolysiloxanes, and cyclic methylhydrogensiloxane-dimethylsiloxane copolymers.

Component (ii) must be added to our addition reaction composition at 0.5 to 90 weight parts per 100 weight parts of component (i), and is preferably added at 1 to 80 weight parts per . Addition of component (ii) at less than 0.5 weight parts per 100 weight parts of component (i) will result in an inadequate cure on the part of the corresponding silicone release coating composition. An addition in excess of 90 weight parts will impair the release performance of the resulting cured release coating.

The metal catalyst and metal catalyst complexes of Component (iii) for our addition reaction composition are catalysts that accelerate the addition reaction between components (i) and (ii) and cause the composition to cure. Preferably, component (iii) is platinum or a platinum compound (i.e. a platinum complex). Component (iii) is chloroplatinic acid, alcohol solutions of chloroplatinic acid, chloroplatinic acid/olefin complexes, chloroplatinic acid/vinylsiloxane complexes, chloroplatinic acid/ketone complexes, platinum supported on alumina micropowder, platinum supported on silica micropowder, and platinum block. The quantity of component (iii) for our addition reaction composition is not critical as long as this component is added in a catalytic quantity. The preferred quantity of component (iii) is 1 to 1,000 ppm based on the weight of (i).

In addition to components (i), (ii), and (iii), addition reaction composition may contain an addition reaction inhibitor for the purpose of equipping the composition with storage stability at room temperature. Examples of suitable inhibtors include acetylenic alcohols such as ethynylcyclohexanol and methylbutynol, conjugated ene-ynes, unsaturated carboxylic esters such as diallyl maleate and dimethyl maleate, maleates and fumarates such as diethyl fumarate, diallyl fumarate, and bis-(methoxyisopropyl) maleate, and half esters and amides. Preferred as the addition reaction inhibitor are alkynyl alcohols such as 3-methyl-1-butyn-3-ol, 3,5-dimethyl-1-hexyn-3-ol, 3-methyl-1-pentyn-3-ol, and phenylbutynol; conjugated ene-ynes such as 3-methyl-3-penten-1-yne and 3,5-dimethyl-1-hexyn-3-ene, benzotriazole, and methylvinylsiloxane cyclics. The quantity of inhibitor should be selected as appropriate. Preferably, it is added to the composition in an amount of 0.001 to 5 weight parts per 100 weight parts component (i).

Bath life extender compounds may also be used in an amount sufficient to further retard the curing reaction at room temperature. Examples of suitable compounds include those compounds which contain one or more primary or secondary alcohol groups, carboxylic acids (including compounds which yield carboxylic acids when exposed to water at room temperature), cyclic ethers, and water. Included in this group are the primary and secondary alcohols; diols and triols, such as ethylene glycol, propylene glycol and glycerine; partial ethers of diols and triols, such as 2-methoxyethanol, 2-methoxypropanol, and 2-methoxyisopropanol; tetrahydrofuran; water and aqueous solutions of mineral acids , alkalis, and salts. Primary and secondary alcohols, preferably having fewer than 10 carbon atoms are the most preferred for the compositions of this invention. Examples thereof include methanol, 1-butanol, 2-butanol, tetradecanol and other alkanols, such as ethanol, and normal-, and iso-propanol, iso-butanol, and the normal-, secondary-, and iso-pentanols, - hexanols, -heptanols, and -octanols; benzyl alcohol, phenol, and other aromatic alcohols such as methylphenyl carbinol, and 2-phenylethyl alcohol; allyl alcohol, and cyclohexanol. It is highly preferred that the bath life extender is benzyl alcohol or water.

The amount of bath life extender used in this invention is not critical and is merely that amount which will provide a longer bath life for the composition, than the bath life of an identical composition without the extender. Amounts of extended can be as high as 10 percent or more by weight, based on the weight of component (i); however superior results with respect to bath life and cure time can be obtained using a lesser amount. Preferably, the amount of bath life extender falls within the range of 0.1 to 5 percent by wieght, and most preferably 1 to 3 percent, based on the weight of Component (i).

Our preferred condensation reaction compositions are release coating compositions comprising: (a) 100 weight parts of an organopolysiloxane having at least 2 silicon-bonded hydroxyl groups per molecule and having a viscosity of at least 40 centipoise at 25°C, (b) 0.5 to 90 weight parts of an organopolysiloxane having at least 2 silicon-bonded hydrogen atoms per molecule and having a viscosity of 1 to 1,000 centipoise at 25°C, and (c) 0.01 to 20 weight parts of a metal salt of an organic acid.

The organopolysiloxane of component (a) is the main compound of this type of silicone release coating composition. Component (a) is preferably a compound having the average unit formula R⁶_{c}SiO_{(4-c)/2} wherein R⁶ denotes monovalent hydrocarbon groups or a silicon-bonded hydroxyl group, and c has a value of from 1.95 to 2.05, with the proviso that at least 2 of R⁶ groups per compound are silicon-bonded hydroxyl groups. The monovalent hydrocarbon groups of R⁶ are as delineated above for R⁴ including preferred embodiments thereof. It is preferred that R⁶ is methyl.

The molecular structure of component (a) is not critical, and it may be straight chain, cyclic, network, and partially branched straight chain, with straight-chain structures being preferred. The terminal groups for the straight-chain forms of (a) are exemplified by dimethylhydroxysiloxy and methylphenylhydroxysiloxy. Component (a) must have a viscosity at 25°C of at least 40 centipoise, while the upper limit ranges up to and include the use of gums. When component (a) has a viscosity below 40 centipoise, excessively large amounts of the corresponding release coating composition will infiltrate into the substrate. When used in a solventless form, (a) preferably his a viscosity at 25°C of 40 to 10,000 centipoise and more preferably of 100 to 5,000 centipoise. When used in a solvent-based formulation, component (a) preferably has a viscosity at 25°C of 100,000 centipoise up to the viscosities of gums. More preferably, the viscosity ranges from 500,000 centipoise up to the viscosities of gums.

The organopolysiloxane compounds of component (a) are exemplified by dimethylhydroxysiloxy-endblocked dimethylpolysiloxines, dimethylhydroxysiloxy-endblocked dimethylsiloxane-methylvinylsiloxane copolymers, dimethylhydroxysiloXy-endblocked dimethylsiloxane-methylphenylsiloxane copolymers, dimethylhydroxysiloxy-endblocked methylvinylpolysiloxanes, dimethylhydroxysiloxy- endblocked methylphenylpolysiloxanes, dimethylhydroxysiloxy-endblocked dimethylsiloxane-methyl(5-hexenyl)siloxane copolymers, and dimethylhydroxysiloxy-endblocked methylphenylpolysiloxanes.

The organopolysiloxane of component (b) functions as a crosslinker for the condensation reaction. Component (b) is preferably a compound having the average unit formula R⁷_{d}SiO_{(4-d)/2} wherein R⁷ is selected from hydrogen atom and monovalent hydrocarbon groups, and d has a value of 1.50 to 3.00, with the proviso that at least 2 of the R⁷ groups in the siloxane units defined by the formula are hydrogen atoms. The monovalent hydrocarbon groups of R⁷ are as delineated above for R⁴ including preferred embodiments thereof. It is preferred that R⁷ is methyl.

The molecular structure of component (b) is not critical, and it may be straight-chain, cyclic, network, and partially branched straight-chain, with straight-chain structures being preferred. The terminal groups for the straight-chain forms of component (b) are exemplified by trimethylsiloxy, dimethylphenylsiloxy, dimethylhydrogensiloxy, and dimethylhydroxysiloxy. Component (b) has a preferred viscosity at 25°C of 5 to 500 centipoise. When component (b) has a viscosity below 1 centipoise, it will be too volatile and the resulting silicone release composition will not be stable. When the viscosity of this component exceeds 1,000 centipoise, the corresponding silicone release coating composition requires lengthy cure times, and the cured release coating will exhibit a poor release performance.

The organopolysiloxane compounds of component (b) are exemplified by trimethylsiloxy-endblocked methylhydrogenpolysiloxanes, trimethylsiloxy-endblocked dimethylsiloxane-methylhydrogensiloxane copolymers, dimethylhydrogensiloxy-endblocked dimethylpolysiloxanes, dimethylhydrogensiloxy-endblocked dimethylsiloxane-methylhydrogensiloxane copolymers, cyclic methylhydrogenpolysiloxanes, and cyclic methylhydrogensiloxane- dimethylsiloxane copolymers.

Component (b) must be added to our condensation reaction compositions at 0.5 to 90 weight parts per 100 weight parts of component (a), and is preferably present in amount from 1 to 80 weight parts. Addition of component (b) at less than 0.5 weight parts per 100 weight parts of component (a) will result in an inadequate cure on the part of the corresponding silicone release coating composition. An addition in excess of 90 weight ports will impair the release performance of the resulting cured release coating.

The metal salts of organic acids of component (c) in our condensation reaction compositions are catalysts that accelerate the condensation reaction between components (a) and (b) and cause the composition to cure. Component (c) is exemplified by dibutyltin diacetate, dibutyltin dioctoate, dibutyltin dilaurate, dioctyltin dilaurate, tin octoate, zinc naphthoate, and iron octoate.

Preferably component (c) is present in our condensation reaction compositions in an amount of from 0.01 to 20 weight parts per 100 weight parts of component (a).

The silicone release coating compositions of our invention may optionally contain organic solvents, adhesion promoters, colorants, pigments, and fillers such as silica micropowder. The use of organic solvents is preferred because they improve the storage stability of our compositions and improve the coatability on various substrates. The specific organic solvent is not critical as long as it can provide a homogeneous solution of the composition. This organic solvent is exemplified by aromatic hydrocarbons such as benzene, toluene, and xylene, aliphatic hydrocarbons such as pentane, hexane, and heptane, halogenated hydrocarbons such as trichloroethylene, perchloroethylene, trifluoromethylbenzene, 1,3-bis(trifluoromethyl)benzene, and methylpentafluorobenzene, ethyl acetate and methyl ethyl ketone.

Component (B) in the compositions of our invention is an organosilicon compound having the general formula 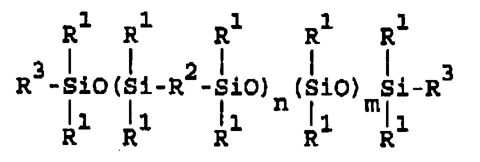 wherein R¹ denotes a monovalent hydrocarbon group having from 1 to 10 carbon atoms and being free of aliphatic unsaturation, R² denotes an alkylene group having from 2 to 10 carbon atoms, R³ is selected from a hydrogen atom, an alkenyl group having from 2 to 10 carbon atoms, and a hydroxyl group, m has a value of zero or greater than zero, and n has a value of greater than zero.

This organosilicon compound functions as a CRA and imparts an optimal peel strength to our silicone release coating compositions when they are applied to a substrate and cured. It also functions to inhibit the migration of the base compounds of components (i) and (a) into the tacky substance. It thereby prevents any reduction in the residual adhesion of the tacky substance.

The group R¹ is exemplified by alkyl groups such as methyl, ethyl, propyl, butyl, pentyl, and octyl; aryl groups such as phenyl, tolyl, and xylyl; aralkyl groups such as benzyl and phenethyl, and halogen-substituted alkyl groups such as 3-chloropropyl and 3,3,3-trifluoropropyl. It is preferred that R¹ is methyl.

The group R² is specifically exemplified by ethylene, propylene, butylene, pentylene, hexylene, and octylene. The group R³ denotes a hydrogen atom, an alkenyl group having from 2 to 10 carbon atoms, or a silicon-bonded hydroxyl group. The alkenyl groups of R³ are vinyl, allyl, butenyl, pentenyl, hexenyl, and octenyl. The group R³ of the organosilicon compound is preferably a hydrogen atom or an alkenyl group having from 2 to 10 carbon atoms when component (A) is an addition reaction composition. The group R³ is preferably a hydrogen atom or a silicon-bonded hydroxyl group when component (A) is a condensation reaction composition of our invention.

The viscosity of organosilicon compound (B) at 25°C is not critical. The preferred range is 50 to 10,000 centistokes because this range affords excellent handling characteristics for our silicone release coating composition, and also provides excellent release properties the corresponding cured release coating. Component (B) of the present invention is desirable as a CRA for solvent-free silicone release coating compositions because it does not raise the viscosity of the composition. In addition, the peel strength of the cured release coating can be adjusted by varying the quantity of our organosilicon compound (B).

Organosilicon compounds suitable as component (B) in our compositions include compounds having the following general formulae: 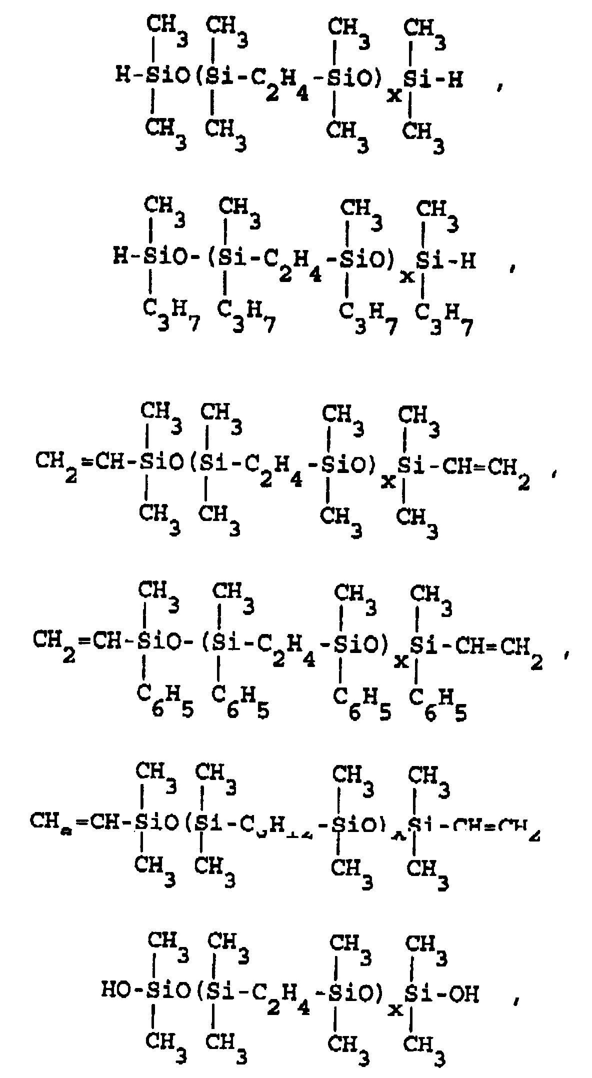 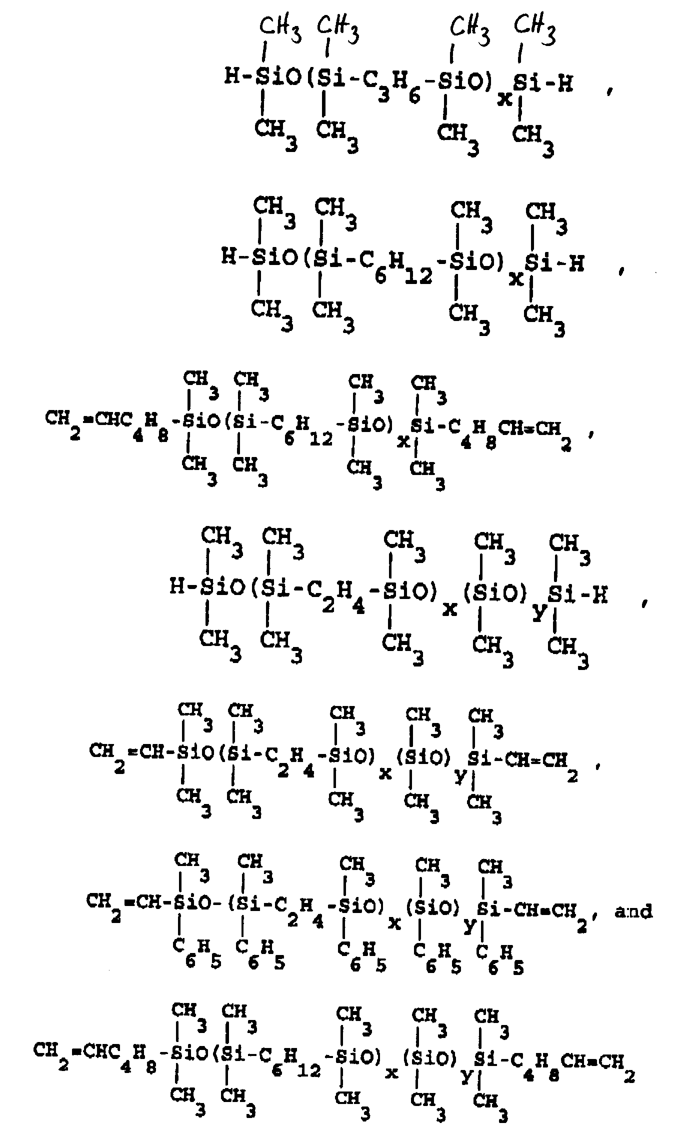 wherein x any y both have a value of greater than zero. No particular restrictions apply to the method for preparing the organosilicon compound of component (B). It can be prepared, for example, by running an addition polymerization reaction. This is carried out by reacting a diorganosiloxane having the general formula: 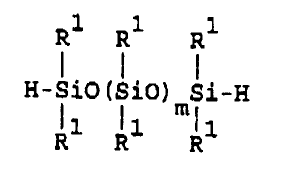 wherein R¹ denotes a monovalent hydrocarbon group having from 1 to 10 carbon atoms and being free of aliphatic unsaturation and m has a value of zero or greater than zero with a diorganosiloxane having the general formula: 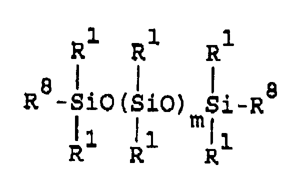 wherein R¹ denotes a monovalent hydrocarbon group having from 1 to 10 carbon atoms and being free of aliphatic unsaturation, R⁸ denotes an alkenyl group having from 2 to 10 carbon atoms, and m has a value of zero or greater than zero, in the presence of platinum or a complex of platinum.

Another method comprises an addition polymerization reaction, which relates in the presence of platinum or a platinum complex, a diorganosiloxane having the general formula: 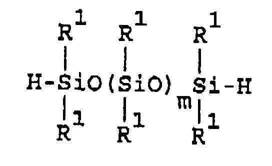 wherein R¹ denotes a monovalent hydrocarbon group having from 1 to 10 carbon atoms and being free of aliphatic unsaturation and m has a value of zero or greater than zero, and a compound containing unsaturated aliphatic hydrocarbon groups having from 3 to 10 carbon atoms and having 2 carbon-carbon double bonds or a compound containing unsaturated aliphatic hydrocarbon groups having from 2 to 10 carbon atoms and having a carbon-carbon triple bond. Still another method comprises first hydrolyzing an organosilicon compound having the general formula: 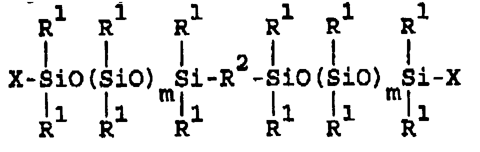 wherein R¹ denotes a monovalent hydrocarbon group having from 1 to 10 carbon atoms and being free of aliphatic unsaturation, R² denotes an alkylene group having from 2 to 10 carbon atoms, X denotes a hydrolyzable group, and m has a value of zero or greater than zero, followed by polymerization under acid or base catalysis. X is exemplified by halogen atoms such as chlorine, and bromine, and by alkoxy groups such as methoxy, ethoxy, and propoxy.

The organosilicon compound of component (B) is present in our compositions in an amount of from 0.5 to 500 weight parts per 100 weight parts of the organopolysiloxane component (i.e. components (i) or (a)) in our silicone release coating compositions. The release resistance of the cured release coating will be too low when the organosilicon compound of component (B) is present at less than 0.5 weight parts per 100 weight parts of the organopolysiloxane component in the silicone release coating compositions Contrastingly, the release resistance of the cured release coating becomes very high when component (B) is present at more than 500 weight parts. In the case of our addition reaction composition, the component (B) is preferably present in an amount from 1.0 to 500 weight parts, and more preferably it 2.0 to 200 weight parts per 100 weight parts of organopolysiloxane (i). In for our condensation reaction composition, component (B) is preferably present in an amount from 1.0 to 500 weight parts, and more preferably at 2.0 to 200 weight parts, per 100 weight parts of organopolysiloxane (a).

Our silicone release coating composition may be prepared by blending the organosilicon compound of component (B) into the silicone release coating composition of component (A), either during or after its preparation. The conditions for curing our silicone release compositions arc not critical. For example, our release coating is preferably cured on a coated substrate by applying heat to the substrate at temperatures in the range of 50°C to 200°C. When cured, the silicone release coating compositions of our invention exhibit optimal release values against tacky substances. They can be formed on the surface of various substrates such as paper, cardboard, laminated paper, synthetic plastic films, fabrics, synthetic fibers, and metal foils. Substrates having applied thereon our cured release coatings can be used for applications such as process paper, asphalt paper, tapes, and labels. Since our relatively low-viscosity organosilicon compound of component (B) can be used as the CRA in our silicone release compositions, this invention can, surprinsingly be used to formulate solvent-free silicone release coatings.

The silicone release coating compositions of the present invention are described in greater detail through working examples. The viscosity values reported were measured at 25°C. The cured release coatings were evaluated for their peel strength and residual adhesion in relation to tacky substances in accordance with the following methods.

The peel strength of the cured release coating was evaluated as follows. The silicone release composition was coated at approximately 1.0 g/m² on polyethylene-laminated kraft paper, and then cured by heating the coated paper in a forced circulation oven for 30 seconds at 160°C. An acrylic-based pressure-sensitive adhesive (Oribine™ BPS8170, from Toyo Ink Mfg. Company, Limited) was then coated on the resulting cured release coating followed by heating for 2 minutes at 70°C in a forced circulation oven. A 25-micrometer polyethylene terephthalate film was subsequently applied to the acrylic-based pressure-sensitive adhesive, and the assembly was then held at 25°C in 60% humidity under a load of 20 gf/cm². A 5-cm wide strip was subsequently cut from the backing paper, and the peel strength (gf) was measured by peeling the backing paper strip at 180° using a Tensilon™ tester.

The residual adhesion of tacky substances was measured as follows. The silicone release coating composition was coated at approximately 1.0 g/m² on polyethylene-laminated kraft paper, and a cured release coating was then produced by heating the coated paper in a forced circulation oven for 30 seconds at 160°C. Polyester tape (Polyester Tape 31B from Nitto Denko Kabushiki Kaisha) was applied to the cured release coating, and the assembly was heated for 20 hours at 60°C under a load of 20 gf/cm². The polyester tape was thereafter peeled off and applied to a stainless steel sheet. The peel strength F (gf) was measured by peeling the polyester tape at 180° using a Tensilon™ teeter. In the blank experiment, the same type of polyester tape as above was applied to a sheet of Teflon™ instead of our silicone release coating composition. This was followed by heating for 20 hours at 60°C under a load of 20 gf/cm². The polyester tape was thereafter peeled off and applied to a stainless steel sheet. The peel strength was measured by peeling the polyester tape at 180° using a Tensilon™ tester to give the reference peel strength F₀ for the polyester tape. The peel strength F is reported as a percentage (%) of the reference peel strength F₀.

### Example 1

The following were mixed to homogeneity: 100 weight parts of trimethylsiloxy-endblocked dimethylsiloxane- methylvinylsiloxane copolymer gum (having a vinyl group content of 1 weight percent), 5 weight parts of trimethylsiloxy-endblocked methylhydrogenpolysiloxane (having a viscosity of 10 centipoise), 40 weight parts of an organosilicon compound (having a viscosity of 400 centipoise) having the formula: 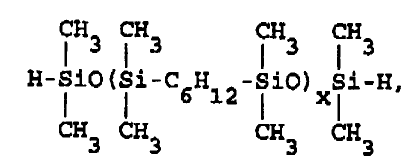 0.9 weight parts 3,5-dimethyl-3-hexen-1-yne, and 1,350 weight parts toluene. A silicone release composition was then prepared by the addition with mixing to homogeneity of sufficient isopropanolic chloroplatinic acid solution to give 100 ppm platinum metal in the chloroplatinic acid based on the dimethylsiloxane-methylvinylsiloxane copolymer. The peel strength and residual adhesion of the tacky substance were measured on the cured release coating afforded by the cure of this silicone release composition. These results are reported in Table I.

### Comparative Example 1

A Silicone release composition was prepared as in Example 1, but without the organosilicon compound that was used in Example 1. The peel strength and residual adhesion of the tacky substance were measured on the cured release coating, and these results are reported in Table I.

### Example 2

The following were mixed to homogeneity: 100 weight parts of dimethylvinylsiloxy-endblocked dimethylsiloxane- methylvinylsiloxane copolymer (having a viscosity of 520 centipoise and a vinyl group content of 0.8 weight percent), 7 weight parts trimethylsiloxy-endblocked methylhydrogenpolysiloxane (having a viscosity of 20 centipoise), 64 weight parts of an organosilicon compound (having a viscosity of 350 centipoise) having the formula 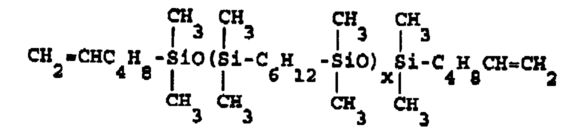 and 0.9 weight parts methylbutynol. A silicone release composition having a viscosity of 400 centipoise was then prepared by the addition with mixing to homogeneity of sufficient isopropanolic chloroplatinic acid solution to give 190 ppm platinum metal in the chloroplatinic acid based on the dimethylsiloxane-methylvinylsiloxane copolymer. The peel strength and residual adhesion of the tacky substance were measured on the resulting cured release coating, and these results are reported in Table I.

### Comparative Example 2

A silicone release composition having a viscosity of 2,000 centipoise was prepared using the procedure of Example 2, but replacing the organosilicon polymer with a granular silicone copolymer compound having the following average unit formula:

(CH₂=CH(CH₃)₂SiO_{1/2})_{0.1}((CH₃)₃SiO_{1/2})_{0.7}(SiO_{4/2})_{1.0} .

The peel strength and residual adhesion of tacky substance were measured on the cured release coating afforded by this silicone release composition, and these results are reported in Table I.

### Example 3

A silicone release composition having a viscosity of 420 centipoise was prepared using the procedure of Example 2, but in this case replacing the organosilicon compound with 64 weight parts of an organosilicon compound (having a viscosity of 400 centipoise) having the following formula 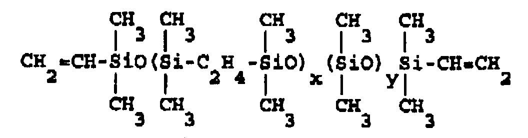 where the ratio of x to y (x:y) is 9:1. The peel strength and residual adhesion of the tacky substance were measured on the cured release coating afforded by the cure of this composition, and theme results are reported in Table I.

**Table I**

| | invention examples | | | comparative examples | |
|---|---|---|---|---|---|
| | Example 1 | Example 2 | Example 3 | Comp. Ex. 1 | Comp. Ex. 2 |
| peel strength (gf/5 cm) | 56 | 63 | 60 | 22 | 54 |
| residual adhesion (%) | 98 | 99 | 98 | 98 | 75 |

### Example 4

A silicone release composition was prepared by mixing the following to homogeneity in 1,350 weight parts toluene: 100 weight parts of a dimethylhydroxysiloxy-endblocked dimethylpolysiloxane gum, 7 weight parts of trimethylsiloxy-endblocked methylhydrogenpolysiloxane having a viscosity of 10 centipoise, 40 weight parts of an organosilicon compound (having a viscosity of 400 centipoise) having the following formula: 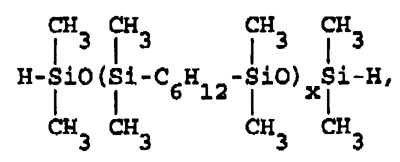 and 5 weight parts of dibutyltin diacetate. The peel strength and residual adhesion of tacky substance were measured on the cured release coating, and these results are reported in Table II.

### Comparative Example 3

A silicone release composition was prepared using the procedure of Example 4, but without using the organosilicon compound. The peel strength and residual adhesion of tack substance were measured on the cured release coating, and these results are reported in Table II.

### Example 5

A silicone release composition having a viscosity of 900 centipoise was prepared by mixing the following to homogeneity in 1,390 weight parts toluene: 100 weight parts of dimethylhydroxysiloxy-endblocked. dimethylpolysiloxane gum, 12 weight parts of trimethylsiloxy-endblocked methylhydrogenpolysiloxane having a viscosity of 10 centipoise, 40 weight parts of an organosilicon compound (having a viscosity of 350 centipoise) with the following formula 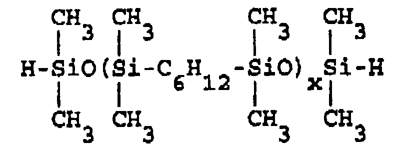 and 5 weight parts dibutyltin diacetate. The peel strength and residual adhesion of tacky substance were measured on the cured release coating, and these results are reported in Table II.

### Comparative Example 4

A silicone release composition having a viscosity of 7,000 centipoise wag prepared using the procedure of Example 5, but replacing the organosilicon compound with a granular silicone copolymer compound having the following average unit formula:

(CH₂=CH(CH₃)₂SiO_{1/2})_{0.1}((CH₃)₃SiO_{1/2})_{0.7}(SiO_{4/2})_{1.0} .

The peel strength and residual adhesion of the tacky substance were measured on the cured release coating, and these results are reported in Table II.

### Example 6

A silicone release composition was prepared using the procedure of Example 5, but replacing the organosilicon compound with 64 weight parts of an organosilicon compound (having a viscosity of 1,600 centipoise) having the following formula 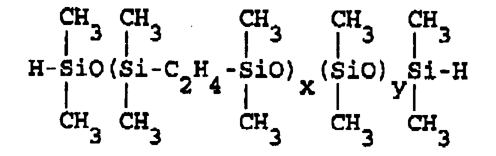 wherein the ratio of x to y (x:y) is 9:1. The peel strength and residual adhesion of the tacky substance were measured on the cured release coating, and these results are reported in Table II.

**Table II**

| | invention examples | | | comparative examples | |
|---|---|---|---|---|---|
| | Example 4 | Example 5 | Example 6 | Comp. Ex. 3 | Comp. Ex. 4 |
| peel strength (gf/5 cm) | 59 | 56 | 53 | 20 | 42 |
| residual adhesion (%) | 94 | 94 | 93 | 94 | 73 |

## Claims (Claims for the following Contracting State(s): DE, FR, GB)

1. Use of an organosilicon compound having the general formula as an additive for controlling release properties of a silicone release coating composition: 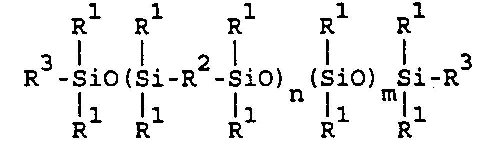 wherein R¹ denotes a monovalent hydrocarbon group having from 1 to 10 carbon atoms and free of aliphatic unsaturation, R² denotes an alkylene group having from 2 to 10 carbon atoms, R³ is selected from a hydrogen atom, an alkenyl group having from 2 to 10 carbon atoms, and a hydroxyl group, m has a value of zero or greater than zero, and n has a value of greater than zero.

2. Use according to Claim 1, wherein R¹ is selected from the group consisting of methyl, ethyl, propyl, butyl, pentyl, octyl, phenyl, tolyl, xylyl, benzyl, phenethyl, 3-chloropropyl, and 3,3,3-trifluoropropyl.

3. Use according to Claim 1, wherein R² is selected from the group consisting of ethylene, propylene, butylene, pentylene, hexylene, and octylene.

4. Use according to Claim 1, wherein R³ is selected from the group consisting of vinyl, allyl, butenyl, pentenyl, hexenyl, and octenyl.

5. Use according to Claim 1, wherein said organosilicon compound has its formula selected from the group consisting of: 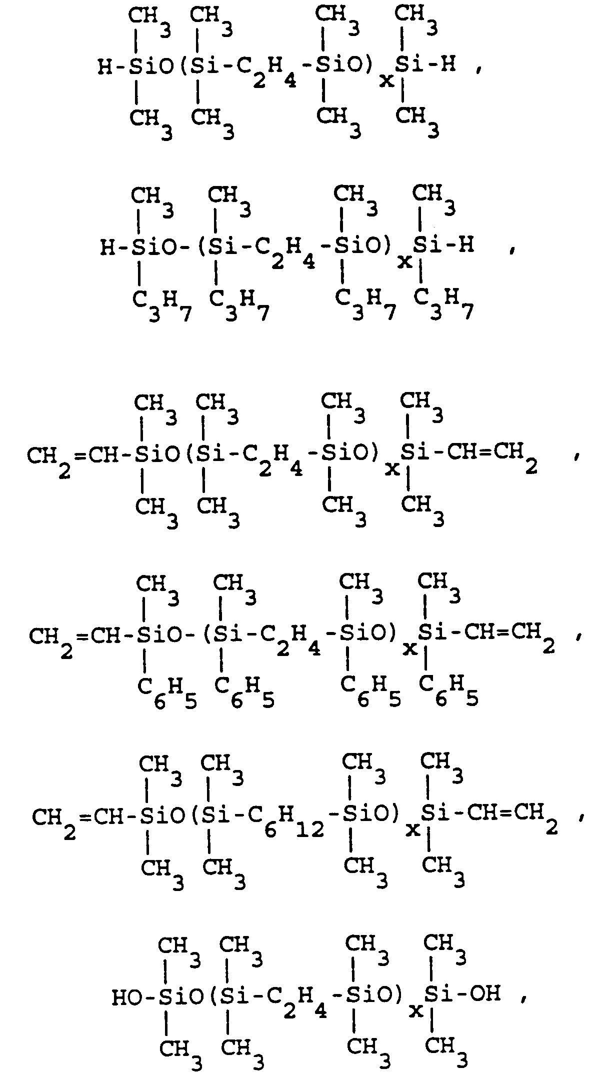 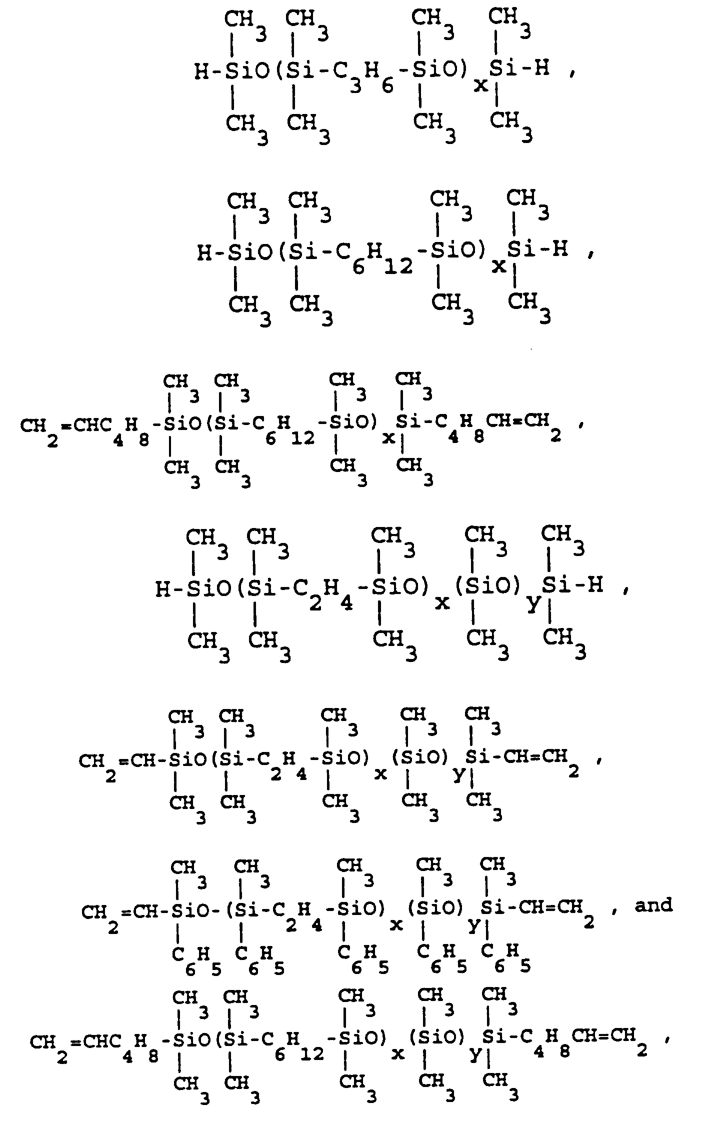 wherein x and y both have a value of greater than zero.

## Claims (Claims for the following Contracting State(s): ES, IT)

1. A composition comprising:
(A) a silicone release coating Composition; and
(B) an organosilicon compound having the general formula: 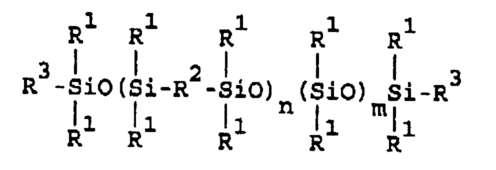 wherein R¹ denotes a monovalent hydrocarbon group having from 1 to 10 carbon atoms and free of aliphatic unsaturation, R² denotes an alkylene group having from 2 to 10 carbon atoms, R³ is selected from a hydrogen atom, an alkenyl group having from 2 to 10 carbon atoms, and a hydroxyl group, m has a value of zero or greater than zero, and n has a value of greater than zero.

2. A composition according to Claim 1, wherein (A) is selected from the group consisting of an addition reaction-curing silicone release coating composition, a condensation reaction-curing silicone, release coating composition, an organoperoxide-curing silicone release coating composition, and a radiation curing silicone release coating composition.

3. A composition according to Claim 2, wherein the composition further comprises on organic solvent selected from the group consisting of benzene, toluene, xylene, pentane, hexane, heptane, trichloroethylene, perchloroethylene, trifluoromethylbenzene, 1,3-bis(trifluoromethyl)benzene, methylpentafluorobenzene, ethyl acetate, and methyl ethyl ketone.

4. A composition according to Claim 1, wherein R¹ is selected from the group consisting of methyl, ethyl, propyl, butyl, pentyl, octyl, phenyl, tolyl, xylyl, benzyl, phenethyl, 3-chloropropyl, and 3,3,3-trifluoropropyl.

5. A composition according to Claim 1, wherein R² is selected from the group consisting of ethylene, propylene, butylene, pentylene, hexylene, and octylene.

6. A composition according to Claim 1, wherein R³ is selected from the group consisting of vinyl, allyl, butenyl, pentenyl, hexenyl, and octenyl.

7. A composition according to Claim 1, wherein (B) is a compound having its formula selected from the group consisting of: 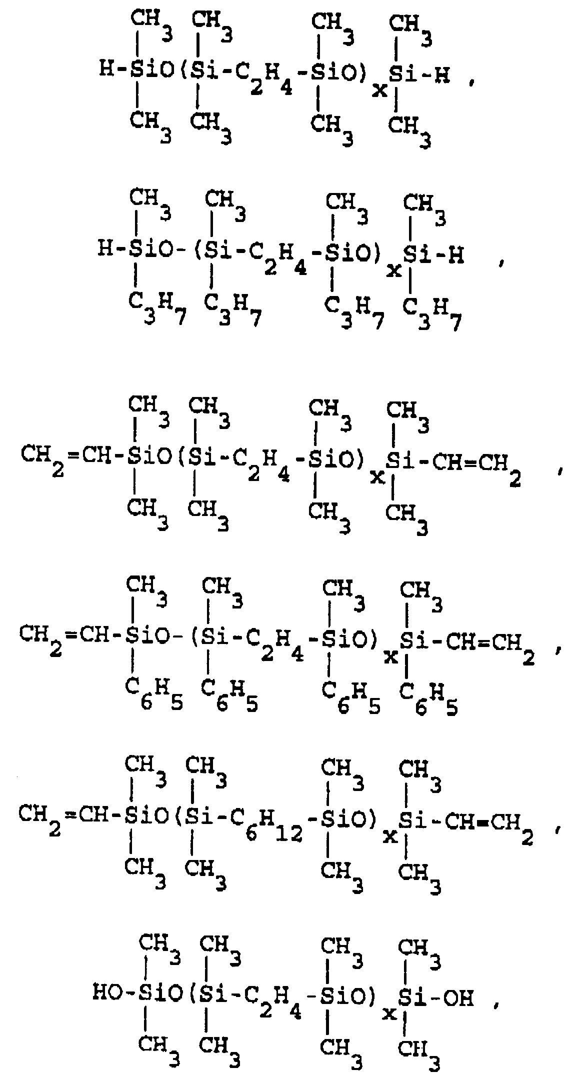 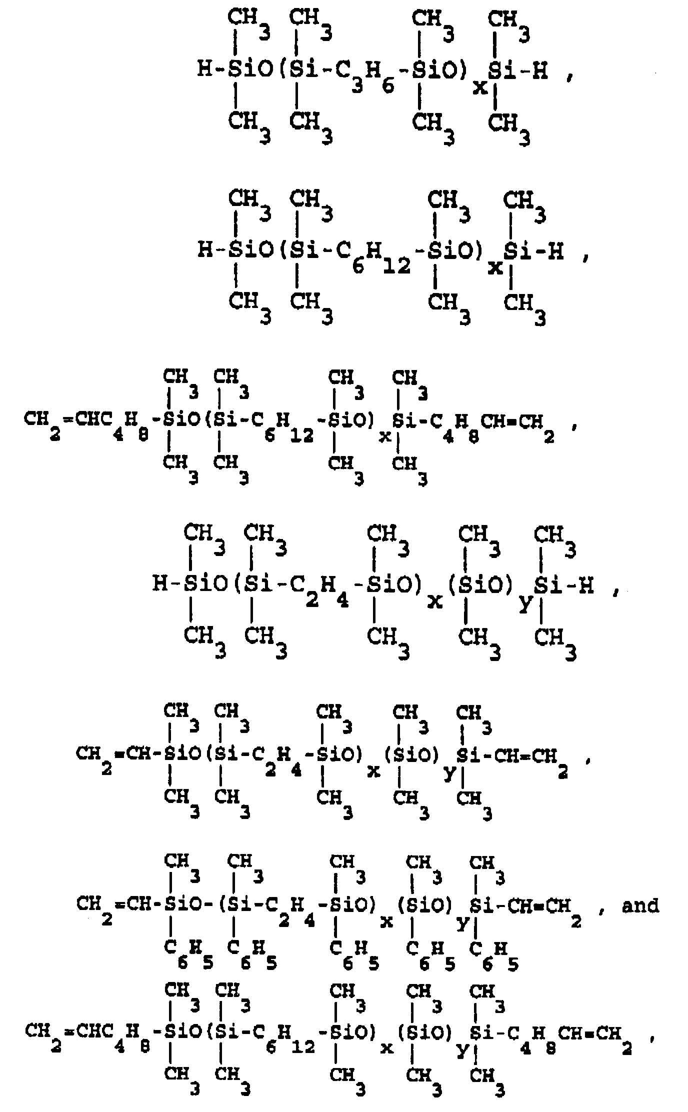 wherein x and y both have a value of greater than zero.

## Patentansprüche (Patentansprüche für folgende(n) Vertragsstaat(en): DE, FR, GB)

1. Verwendung einer Organosiliciumverbindung der folgenden allgemeinen Formel als Additiv zur Steuerung der Trenneigenschaften einer Silicontrennbeschichtungszusammensetzung: 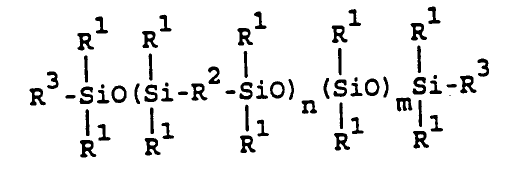 worin R¹ für eine einwertige Kohlenwasserstoffgruppe mit 1 bis 10 Kohlenstoffatom(en), die keine aliphatischen ungesättigten Bindungen aufweist, steht, R² eine Alkylengruppe mit 2 bis 10 Kohlenstoffatomen bezeichnet, R³ aus einem Wasserstoffatom, einer Alkenylgruppe mit 2 bis 10 Kohlenstoffatomen und einer Hydroxylgruppe ausgewählt ist, m einen Wert von 0 oder größer als 0 aufweist und n einen Wert von größer als 0 aufweist.

2. Verwendung nach Anspruch 1, worin R¹ aus Methyl, Ethyl, Propyl, Butyl, Pentyl, Octyl, Phenyl, Tolyl, Xylyl, Benzyl, Phenethyl, 3-Chlorpropyl und 3,3,3-Trifluorpropyl ausgewählt ist.

3. Verwendung nach Anspruch 1, worin R² aus Ethylen, Propylen, Butylen, Pentylen, Hexylen und Octenyl ausgewählt ist.

4. Verwendung nach Anspruch 1, worin R³ aus Vinyl, Allyl, Butenyl, Pentenyl, Hexenyl und Octenyl ausgewählt ist:

5. Verwendung nach Anspruch 1, wobei die Organosiliciumverbindung eine Formel besitzt, die aus den folgenden Formeln ausgewählt ist 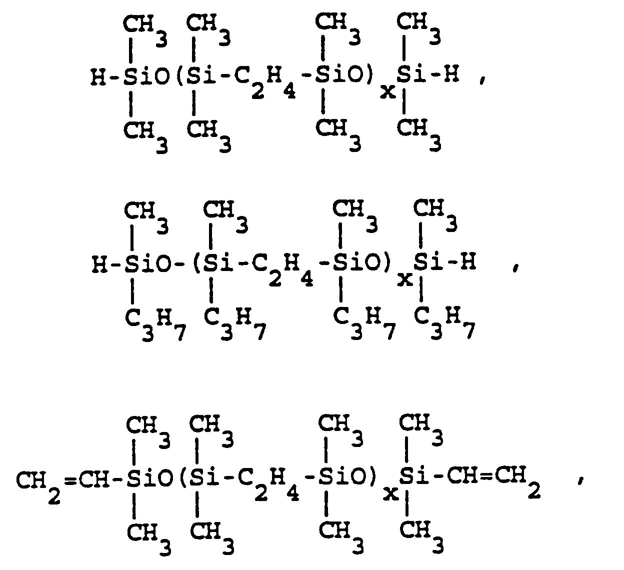 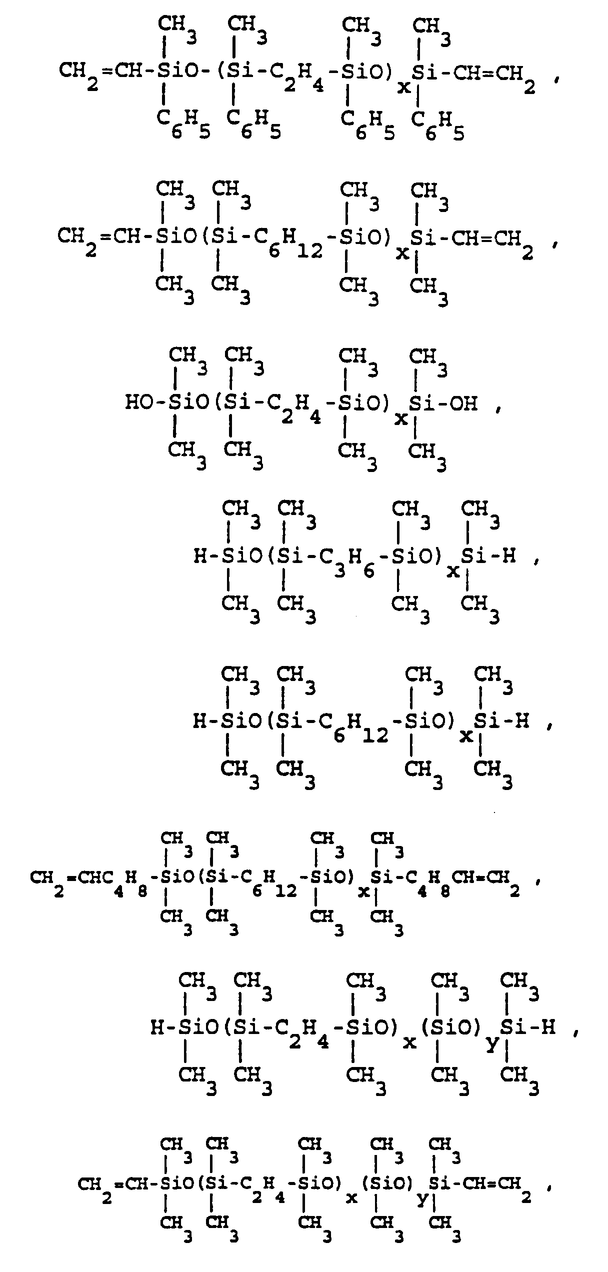 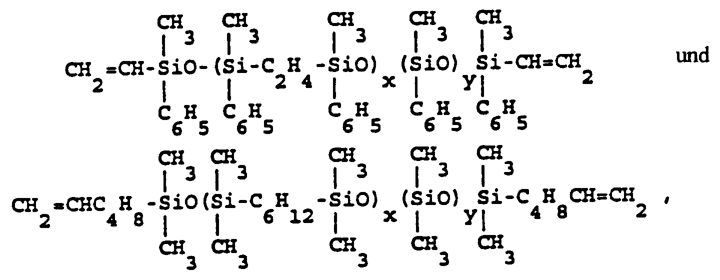 worin sowohl x als auch y einen Wert von größer als 0 besitzen.

## Patentansprüche (Patentansprüche für folgende(n) Vertragsstaat(en): ES, IT)

1. Zusammensetzung, die die folgenden Bestandteile umfaßt:
(A) eine Silicontrennbeschichtungszusammensetzung und
(B) eine Organosiliciumverbindung der folgenden allgemeinen Formel: 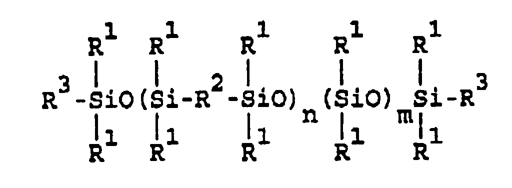 worin R¹ für eine einwertige Kohlenwasserstoffgruppe mit 1 bis 10 Kohlenstoffatom(en), die keine aliphatischen ungesättigten Bindungen aufweist, steht, R² eine Alkylengruppe mit 2 bis 10 Kohlenstoffatomen bezeichnet, R³ aus einem Wasserstoffatom, einer Alkenylgruppe mit 2 bis 10 Kohlenstoffatomen und einer Hydroxylgruppe ausgewählt ist, m einen Wert von 0 oder größer als 0 aufweist und n einen Wert von größer als 0 aufweist.

2. Zusammensetzung nach Anspruch 1, wobei (A) aus einer durch Additionsreaktion härtbaren Silicontrennbeschichtungszusammensetzung, einer durch Kondensationsreaktion härtbaren Silicontrennbeschichtungszusammensetzung, einer durch Organoperoxid härtbaren Silicontrennbeschichtungszusammensetzung und einer durch Strahlung härtbaren Silicontrennbeschichtungszusammensetzung ausgewählt ist.

3. Zusammensetzung nach Anspruch 2, wobei die Zusammensetzung des weiteren ein organisches Lösungsmittel enthält, das aus Benzol, Toluol, Xylol, Pentan, Hexan, Heptan, Trichlorethylen, Perchlorethylen, Trifluormethylbenzol, 1,3-Bis(trifluormethyl)benzol, Methylpentafluorbenzol, Ethylacetat und Methylethylketon ausgewählt ist.

4. Zusammensetzung nach Anspruch 1, worin R¹ aus Methyl, Ethyl, Propyl, Butyl, Pentyl, Octyl, Phenyl, Tolyl, Xylyl, Benzyl, Phenethyl, 3-Chlorpropyl und 3,3,3-Trifluorpropyl ausgewählt ist.

5. Zusammensetzung nach Anspruch 1, worin R² aus Ethylen, Propylen, Butylen, Pentylen, Hexylen und Octenyl ausgewählt ist.

6. Zusammensetzung nach Anspruch 1, worin R³ aus Vinyl, Allyl, Butenyl, Pentenyl, Hexenyl und Octenyl ausgewählt ist:

7. Zusammensetzung nach Anspruch 1, wobei es sich bei (B) um eine Verbindung einer Formel handelt, die aus den folgenden Formeln ausgewählt ist 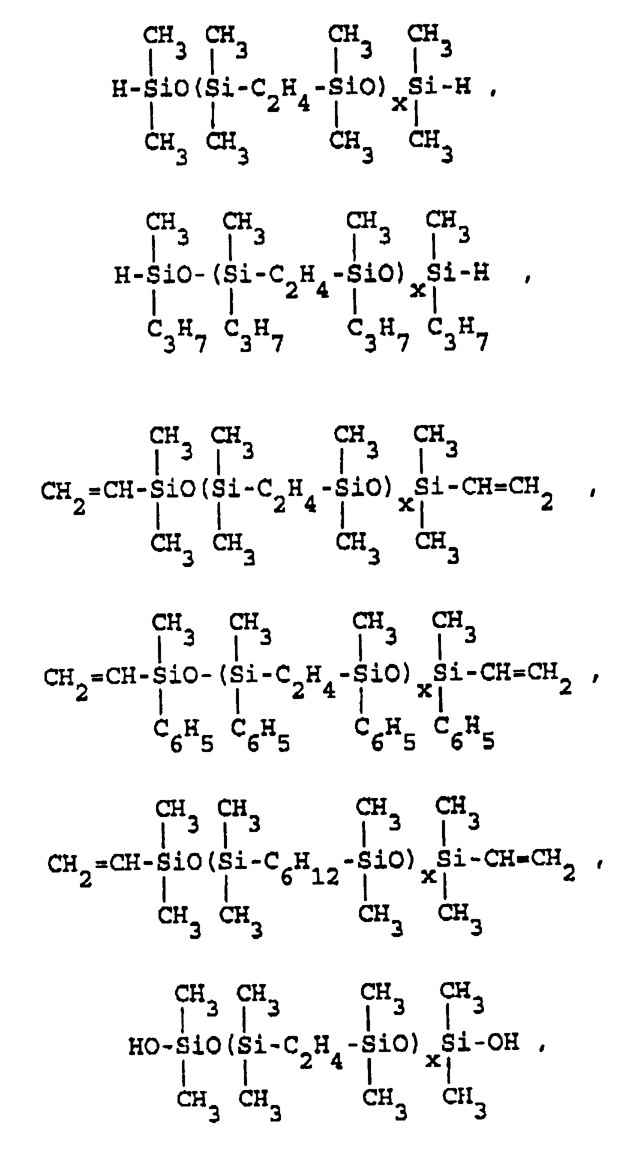 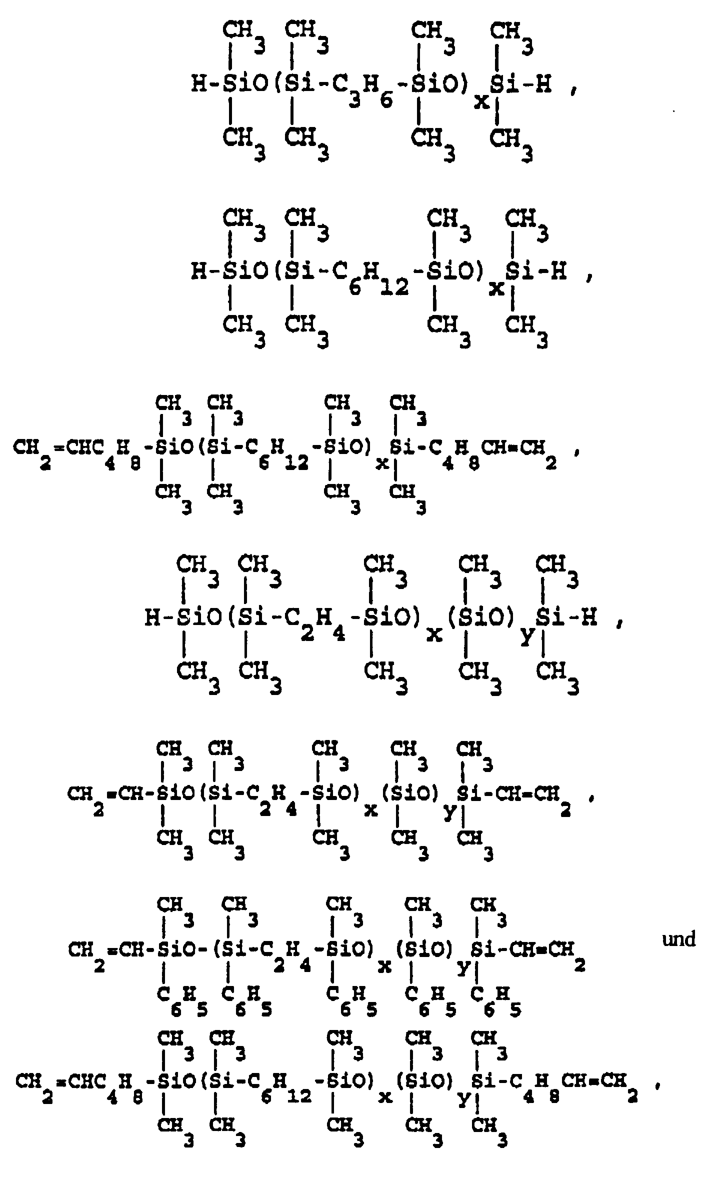 worin sowohl x als auch y einen Wert von größer als 0 besitzen.

## Revendications (Revendications pour l'(les) Etat(s) contractant(s) suivant(s): DE, FR, GB)

1. Utilisation d'un composé organosilicié ayant la formule générale suivante en tant qu'additif pour régler les propriétés anti-adhésives d'une composition de revêtement de silicone antiadhésif : 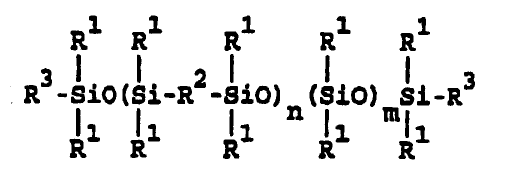 dans laquelle R¹ représente un groupe hydrocarboné monovalent ayant 1 à 10 atomes de carbone et dépourvu d'insaturation aliphatique, R² représente un groupe alkylène ayant 2 à 10 atomes de carbone, R³ est choisi parmi un atome d'hydrogène, un groupe alcényle ayant 2 à 10 atomes de carbone, et un groupe hydroxyle, la valeur de m est zéro ou supérieure à zéro, et la valeur de n est supérieure à zéro.

2. Utilisation selon la revendication 1, dans laquelle R¹ est choisi dans la classe formée par les groupes méthyle, éthyle, propyle, butyle, pentyle, octyle, phényle, tolyle, xylyle, benzyle, phénéthyle, 3-chloropropyle et 3,3,3-trifluoropropyle.

3. Utilisation selon la revendication 1, dans laquelle R² est choisi dans la classe formée par les groupes éthylène, propylène, butylène, pentylène, hexylène et octylène.

4. Utilisation selon la revendication 1, dans laquelle R³ est choisi dans la classe formée par les groupes vinyle, allyle, butényle, pentényle, hexényle et octényle.

5. Utilisation selon la revendication 1, dans laquelle ledit composé organosilicié a sa formule choisie dans la classe formée par : 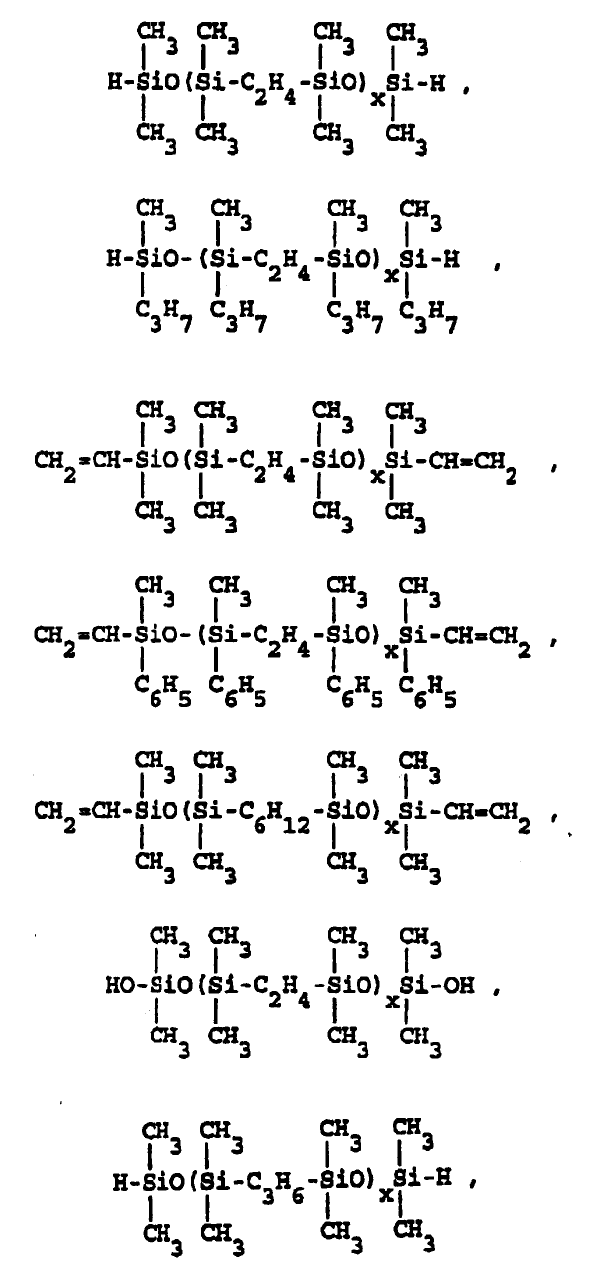 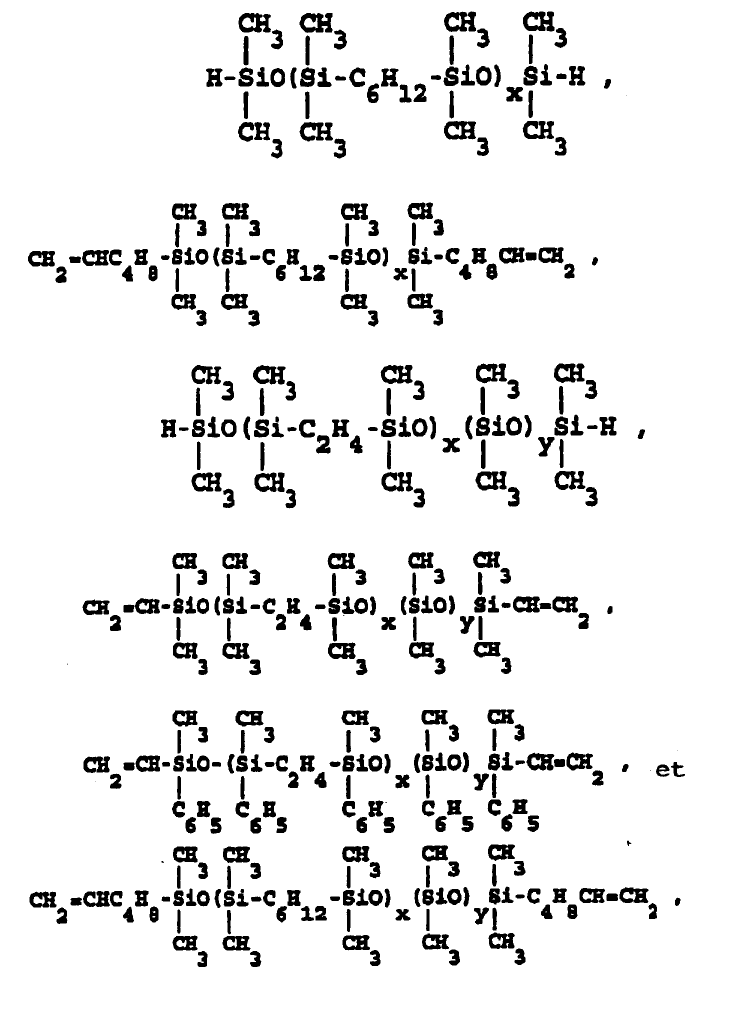 où x et y ont tous deux une valeur supérieure à zéro.

## Revendications (Revendications pour l'(les) Etat(s) contractant(s) suivant(s): ES, IT)

1. Une composition comprenant :
(A) une composition de revêtement de silicone antiadhésif ; et
(B) un composé organosilicié ayant la formule générale : 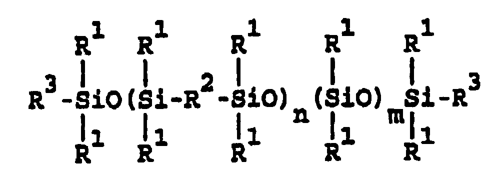 dans laquelle R¹ représente un groupe hydrocarboné monovalent ayant 1 à 10 atomes de carbone et dépourvu d'insaturation aliphatique, R² représente un groupe alkylène ayant 2 à 10 atomes de carbone, R³ est choisi parmi un atome d'hydrogène, un groupe alcényle ayant 2 à 10 atomes de carbone, et un groupe hydroxyle, la valeur de m est zéro ou supérieure à zéro, et la valeur de n est supérieure à zéro.

2. Une composition selon la revendication 1, dans laquelle (A) est choisi dans la classe formée par une composition de revêtement de silicone antiadhésif durcissable par une réaction d'addition, une composition de revêtement de silicone antiadhésif durcissable par une réaction de condensation, une composition de revêtement de silicone antiadhésif durcissable par un peroxyde organique et une composition de revêtement de silicone antiadhésif durcissable par irradiation.

3. Une composition selon la revendication 2, dans laquelle la composition comprend, de plus, un solvant organique choisi dans la classe formée par le benzène, le toluène, le xylène, le pentane, l'hexane, l'heptane, le trichloréthylène, le perchloréthylène, le trifluorométhylbenzène, 1,3-bis(trifluorométhyl)benzène, le méthylpentafluorobenzène, l'acétate d'éthyle et la méthyléthylcétone.

4. Une composition selon la revendication 1, dans laquelle R¹ est choisi dans la classe formée par les groupes méthyle, éthyle, propyle, butyle, pentyle, octyle, phényle, tolyle, xylyle, benzyle, phénéthyle, 3-chloropropyle et 3,3,3-trifluoropropyle.

5. Une composition selon la revendication 1, dans laquelle R² est choisi dans la classe formée par les groupes éthylène, propylène, butylène, pentylène, hexylène et octylène.

6. Une composition selon la revendication 1, dans laquelle R³ est choisi dans la classe formée par les groupes vinyle, allyle, butényle, pentényle, hexényle et octényle.

7. Une composition selon la revendication 1, dans laquelle (B) est un composé dont la formule est choisie dans la classe formée par : 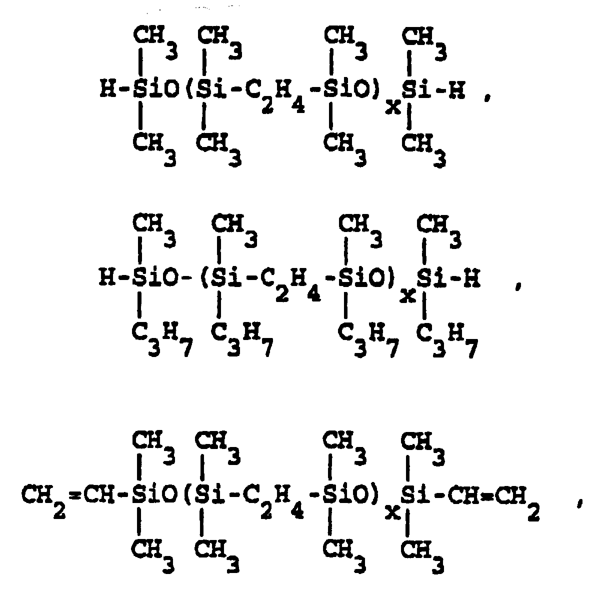 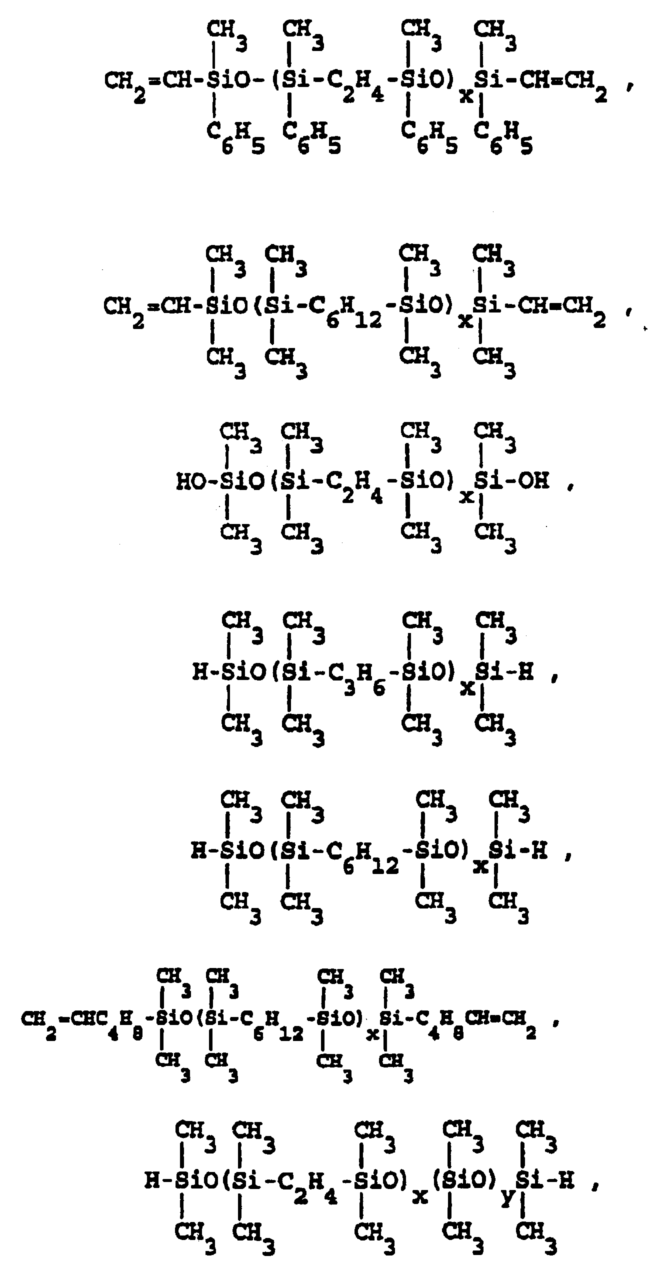 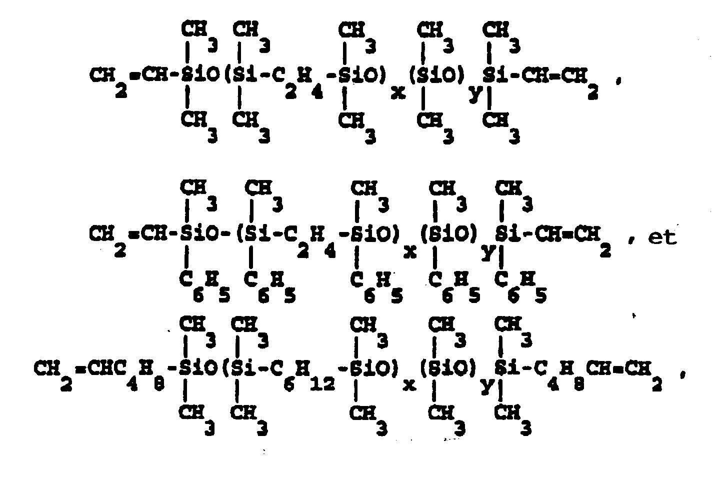 où x et y ont tous deux une valeur supérieure à zéro.
